(19) Europäisches Patentamt
European Patent Office
Office européen des brevets

(11) **EP 3 972 331 B1**

(12) **EUROPEAN PATENT SPECIFICATION**

(45) Date of publication and mention
of the grant of the patent:
**22.11.2023  Bulletin 2023/47**

(21) Application number: **20830931.0**

(22) Date of filing: **10.06.2020**

(51) International Patent Classification (IPC):
*G01S 13/82* (2006.01)    *H04W 64/00* (2009.01)
*H04W 24/10* (2009.01)    *H04W 84/12* (2009.01)

(52) Cooperative Patent Classification (CPC):
**G01S 13/825; H04W 64/00;** H04W 24/10;
H04W 84/12

(86) International application number:
**PCT/CN2020/095378**

(87) International publication number:
**WO 2020/259287 (30.12.2020 Gazette 2020/53)**

(54) **POSITIONING METHOD AND APPARATUS**

POSITIONIERUNGSVERFAHREN UND -APPARAT

PROCÉDÉ ET APPAREIL DE POSITIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **24.06.2019  CN 201910550567**

(43) Date of publication of application:
**23.03.2022  Bulletin 2022/12**

(73) Proprietor: **Huawei Technologies Co., Ltd.
Longgang District
Shenzhen,
Guangdong 518129 (CN)**

(72) Inventors:
• **LIU, Chenchen**
  **Shenzhen, Guangdong 518129 (CN)**
• **HAN, Xiao**
  **Shenzhen, Guangdong 518129 (CN)**
• **DU, Rui**
  **Shenzhen, Guangdong 518129 (CN)**
• **ZHANG, Meihong**
  **Shenzhen, Guangdong 518129 (CN)**

(74) Representative: **Gill Jennings & Every LLP
The Broadgate Tower
20 Primrose Street
London EC2A 2ES (GB)**

(56) References cited:
**WO-A1-2018/069208    US-A1- 2017 250 831
US-A1- 2018 041 990**

• **CHAO-CHUN WANG (MEDIATEK): "draft
specification 1.0 with editorial changes r1- clean
version", IEEE DRAFT;
11-19-0713-00-00AZ-DRAFT-SPECIFICATION-1-
0
-WITH-EDITORIAL-CHANGES-R1-CLEAN-VERSI
ON, IEEE-SA MENTOR, PISCATAWAY, NJ USA ,
vol. 802.11az 2 May 2019 (2019-05-02), pages
1-193, XP068150977, Retrieved from the Internet:
URL:https://mentor.ieee.org/802.11/dcn/19/
11-19-0713-00-00az-draft-specification-1-0
-with-editorial-changes-r1-clean-version.p df
[retrieved on 2019-05-02]**

**Description**

**TECHNICAL FIELD**

This application relates to the field of positioning technologies, and in particular, to a positioning method and apparatus.

**BACKGROUND**

Fine time measurement (fine time measurement, FTM) that can be used to determine a location is defined in the wireless fidelity (wireless fidelity, Wi-Fi) standard 802.11az.

A principle of determining a location by using an FTM technology is as follows: When there is an FTM measurement requirement, a to-be-positioned initiator station (initiator station, ISTA) exchanges a null data packet (null data packet, NDP) frame with at least three responder stations (responder stations, RSTAs) with known locations, calculates a round trip time (round trip time, RTT) in which the NDP frame is transmitted between the ISTA and each RSTA, calculates a distance between the ISTA and each RSTA based on a propagation speed of an electromagnetic wave and the RTT, and then may determine a location of the ISTA based on a trilateral measurement technology.

An existing method for determining a location by using the FTM technology is applicable only to a case in which there is a line of sight (line of sight, LOS) between the ISTA and the RSTA, that is, applicable only to a scenario in which there is no obstacle between the ISTA and the RSTA. When there is a non-line of sight (non-line of sight, NLOS) between the ISTA and the RSTA, that is, when there is an obstacle between the ISTA and the RSTA, the existing FTM method is inapplicable. Therefore, when there is an NLOS between the ISTA and the RSTA, how to determine the location of the ISTA is a technical problem that needs to be urgently resolved.

US2018041990A1 relates to location estimation using multi-user multiple input multiple output in a wireless local area network. WO2018069208A1 relates to user equipment localization in a mobile communication network.

**SUMMARY**

Implementations of this application provide a positioning method and apparatus. A new fine time measurement method is provided, so that positioning can be implemented in both a LOS scenario and an NLOS scenario.

The invention has been defined in the independent claims. Further specific technical features have been defined in the dependent claims.

A first aspect of the invention comprises a positioning method as set forth in claim 1. The method includes: An initiator station obtains first positioning information, where the first positioning information includes a sending moment of a first NDP frame corresponding to sending of the first NPD frame by the initiator station, a receiving moment of the first NDP frame corresponding to receiving of the first NPD frame by the responder station, a sending moment of a second NDP frame corresponding to sending of the second NPD frame by the responder station, a receiving moment of the second NDP frame corresponding to receiving of the second NPD frame by the initiator station, a first direction, and a second direction; the initiator station obtains second positioning information, where the second positioning information includes a sending moment of a third NDP frame corresponding to sending of the third NPD frame by the initiator station, a receiving moment of the third NDP frame corresponding to receiving of the third NPD frame by the responder station, a sending moment of a fourth NDP frame corresponding to sending of the fourth NPD frame by the responder station, a receiving moment of the fourth NDP frame corresponding to receiving of the fourth NPD frame by the initiator station, a fourth direction, and a fifth direction; and the initiator station determines location information of the initiator station based on location information of a responder station, the first positioning information, and the second positioning information.

The first NDP frame is a frame that is sent by the initiator station in the first direction and that is reflected to the responder station by a first node. The second direction is an incident direction in which the first NDP frame is reflected to the responder station by the first node. The second NDP frame is a frame that is sent by the responder station in a third direction and that is reflected to the initiator station by the first node. The third direction is opposite to the second direction. The third NDP frame is a frame that is sent by the initiator station in the fourth direction and that is reflected to the responder station by a second node. The fifth direction is an incident direction in which the third NDP frame is reflected to the responder station by the second node. The fourth NDP frame is a frame that is sent by the responder station in a sixth direction and that is reflected to the initiator station by the second node. The sixth direction is opposite to the fifth direction.

The method further comprises:

determining, by the initiator station, location information of the first node based on the location information of the responder station, the location information of the initiator station, a first angle of departure, AoD, corresponding to the first direction, and a first angle of arrival, AoA, corresponding to the second direction; and/or

determining, by the initiator station, location information of the second node based on the location information of the responder station, the location information of the initiator station, a second AoD corresponding to the fourth direction, and a second AoA corresponding to the fifth direction.

The first node and the second node are passive devices, or are active devices that work in a passive mode, such that the first node and the second node do not have a Wi-Fi communication capability.

In the method provided in this application, even if there is an NLOS between the two stations, the two stations may exchange an NDP frame through reflection by the first node or the second node. In this way, even if there is an obstacle between the two stations, the NDP frame may be exchanged, and then positioning information may be obtained by exchanging the NDP frame, to determine location information of a to-be-positioned station. In addition, in this application, the first node and the second node may be passive targets. That is, in this application, the to-be-positioned station may determine the location information by interacting with only one active station with a known location.

In a possible implementation, that an initiator station obtains first positioning information includes:
the initiator station performs directional fine time measurement to obtain the first positioning information, where that the initiator station performs directional fine time measurement to obtain the first positioning information includes:

the initiator station sends, in the first direction, the first NDP frame that is to be reflected to the responder station by the first node, and determines the sending moment of the first NDP frame; the initiator station receives the second NDP frame that is sent by the responder station in the third direction and that is reflected by the first node, and determines the receiving moment of the second NDP frame; and the initiator station receives a first location measurement report from the responder station, where the first location measurement report includes the receiving moment of the first NDP frame, the sending moment of the second NDP frame, and the second direction; and

that the initiator station obtains second positioning information includes:
the initiator station performs directional fine time measurement to obtain the second positioning information, where that the initiator station performs directional fine time measurement to obtain the second positioning information includes:
the initiator station sends, in the fourth direction, the third NDP frame that is to be reflected to the responder station by the second node, and determines the sending moment of the third NDP frame; the initiator station receives the fourth NDP frame that is sent by the responder station in the sixth direction and that is reflected by the second node, and determines the receiving moment of the fourth NDP frame; and the initiator station receives a second location measurement report from the responder station, where the second location measurement report includes the receiving moment of the third NDP frame, the sending moment of the fourth NDP frame, and the fifth direction.

In the method, the initiator station may obtain the positioning information in real time, to more accurately implement positioning.

In a possible implementation, before obtaining the first positioning information, the initiator station may further receive a trigger frame from the responder station. The trigger frame includes a type indication, the type indication is used to indicate that a type of the trigger frame is a directional ranging type, and the trigger frame of the directional ranging type is used to trigger the initiator station to perform directional fine time measurement.

In the method, the responder station may indicate, by using the trigger frame of the directional ranging type, the initiator station in advance to perform directional fine time measurement, to make a distinction from existing fine time measurement.

In a possible implementation, before obtaining the first positioning information, the initiator station may further send an NDP announcement frame to the responder station. The NDP announcement frame includes a directional indication, and the directional indication is used to indicate a node that is to participate in fine time measurement to perform directional fine time measurement.

In the method, the initiator station may indicate, by using the NDP announcement frame that carries the directional indication, the responder station in advance to currently perform directional fine time measurement, to make a distinction from existing fine time measurement.

In a possible implementation, before obtaining the first positioning information, the initiator station may further send a request frame to the responder station, where the request frame includes first information and second information, the first information is used to indicate that the current negotiation is used to perform directional fine time measurement, and the second information is used to indicate that the initiator station supports directional fine time measurement; and the initiator station may further receive a response frame in response to the request frame from the responder station, where the response frame includes the first information and third information, and the third information is used to indicate that the responder station supports directional fine time measurement.

In the method, before performing directional fine time measurement, the initiator station and the responder station may exchange information about capabilities of each other, and notify each other whether directional fine time measurement is currently initiated and whether the initiator station and the responder station support directional fine time measurement, to make a distinction from existing fine time measurement.

In a possible implementation, that the initiator station determines location information of the initiator station based on location information of a responder station, the first positioning information, and the second positioning information includes: The initiator station determines a first distance based on the sending moment of the first NDP frame, the receiving moment of the first NDP frame, the sending moment of the second NDP frame, and the receiving moment of the second NDP frame, where the first distance is a sum of a distance between the initiator station and the first node and a distance between the first node and the responder station; the initiator station determines a second distance based on the sending moment of the third NDP frame, the receiving moment of the third NDP frame, the sending moment of the fourth NDP frame, and the receiving moment of the fourth NDP frame, where the second distance is a sum of a distance between the initiator station and the second node and a distance between the second node and the responder station; and the initiator station determines the location information of the initiator station based on the location information of the responder station, the first distance, the second distance, the first direction, the second direction, the fourth direction, and the fifth direction.

According to the claimed invention, the initiator station determines location information of the first node based on the location information of the responder station, the location information of the initiator station, a first angle of departure (AoD) corresponding to the first direction, and a first angle of arrival (AoA) corresponding to the second direction; and/or the initiator station determines location information of the second node based on the location information of the responder station, the location information of the initiator station, a second AoD corresponding to the fourth direction, and a second AoA corresponding to the fifth direction.

In the method, after the location information of the initiator station is determined by performing directional fine time measurement, the location information of the first node and/or the location information of the second node may be further determined. In this application, the first node and the second node may be passive targets. In comparison with the conventional technology, in the method in this application, the location information of the initiator station may be determined, and the location information of the passive targets around the initiator station and the responder station may be further determined, to resolve a problem, in the conventional technology, that positioning cannot be performed for a passive target.

In a possible implementation, the response frame further includes a delay indication, and the delay indication is used to indicate delay duration for feeding back a location measurement report by the responder station.

In the foregoing delay measurement mechanism, the responder station may send, to the initiator station, the delay indication used to indicate the delay duration for feeding back a location measurement report, and the initiator station may obtain, based on the delay indication, a time for sending a location measurement report by the responder station. In this way, the responder station may reserve enough time for the responder station to measure channel state information and determine a location measurement report, to make a more accurate feedback. In addition, the delay measurement mechanism is set, so that a responder station with a relatively poor processing capability can perform the method in this application.

In a possible implementation, when a value of the delay indication is 0, the delay indication is used to indicate that the delay duration is 0, and when the value of the delay indication is a non-zero value, the delay indication is used to indicate a length of the delay duration.

In a possible implementation, the NDP announcement frame further includes a new and old direction indication, and the new and old direction indication is used to indicate that a sending direction of an NDP frame sent after the NDP announcement frame is the same as a sending direction of an NDP frame sent after a previous NDP announcement frame.

In the method, it can be ensured that the responder station more accurately determines an incident direction of an NDP frame.

A second aspect of the invention comprises an apparatus as set forth in claim 10. The means configured to perform a method according to any of claims 1 to 9 comprised in the apparatus may be implemented by hardware, or may be implemented by hardware executing corresponding software. The hardware or the software includes one or more modules corresponding to the function.

**BRIEF DESCRIPTION OF DRAWINGS**

FIG. 1 is a schematic diagram of a possible network architecture to which an implementation of this application is applicable;
FIG. 2 is a schematic diagram of FTM in a TB mode according to an implementation of this application;

FIG. 3 is a schematic diagram of a negotiation procedure of FTM according to an implementation of this application;

FIG. 4 is a schematic diagram of a format of a ranging parameters element field according to an implementation of this application;

FIG. 5a is a schematic diagram of a format of a subelement in a TB mode according to an implementation of this application;

FIG. 5b is a schematic diagram of a format of a subelement in a non-TB mode according to an implementation of this application;

FIG. 6 is a schematic diagram of a measurement procedure and a result feedback procedure in a TB mode according to an implementation of this application;

FIG. 7 is a schematic diagram of a ranging measurement process in a TB mode according to an implementation of this application;

FIG. 8a is a schematic diagram of a structure of a structure of a TF ranging sounding frame according to an implementation of this application;

FIG. 8b is a schematic diagram of a structure of a structure of trigger dependent common information according to an implementation of this application;

FIG. 8c is a schematic diagram of a structure of a structure of trigger dependent common information according to an implementation of this application;

FIG. 9 is a schematic diagram of FTM in a non-TB mode according to an implementation of this application;

FIG. 10 is a schematic diagram of a measurement procedure and a result feedback procedure in a non-TB mode according to an implementation of this application;

FIG. 11 is a schematic diagram of a ranging measurement process in a non-TB mode according to an implementation of this application;

FIG. 12a is a schematic diagram of a structure of a structure of an NDPA frame according to an implementation of this application;

FIG. 12b is a schematic diagram of a structure of a structure of a station information field according to an implementation of this application;

FIG. 13 is a schematic flowchart of a positioning method according to an implementation of this application;

FIG. 14 is a schematic flowchart of a method for determining location information of an initiator station according to an implementation of this application;

FIG. 15A, FIG. 15B, and FIG. 15C are schematic flowcharts of a measurement method according to an implementation of this application;

FIG. 16a(1), FIG. 16a(2), and FIG. 16a(3) are schematic flowcharts of still another positioning method according to an implementation of this application;

FIG. 16b(1), FIG. 16b(2), and FIG. 16b(3) are schematic flowcharts of still another positioning method according to an implementation of this application;

FIG. 17a is a schematic diagram of a negotiation procedure of directional FTM according to an implementation of this application;

FIG. 17b is a schematic diagram of measurement and feedback procedures of directional FTM according to an implementation of this application;

FIG. 17c is a schematic diagram of a measurement procedure of directional FTM according to an implementation of this application;

FIG. 17d is another schematic diagram of measurement and feedback procedures of directional FTM according to an implementation of this application;

FIG. 18 is still another schematic diagram of measurement and feedback procedures of directional FTM according to an implementation of this application;

FIG. 19 is still another schematic diagram of measurement and feedback procedures of directional FTM according to an implementation of this application;

FIG. 20 is still another schematic diagram of measurement and feedback procedures of directional FTM according to an implementation of this application;

FIG. 21 is a schematic diagram of a structure of a positioning apparatus according to an implementation of this application; and

FIG. 22 is a schematic diagram of a structure of another positioning apparatus according to an implementation of this application.

## DESCRIPTION OF IMPLEMENTATIONS

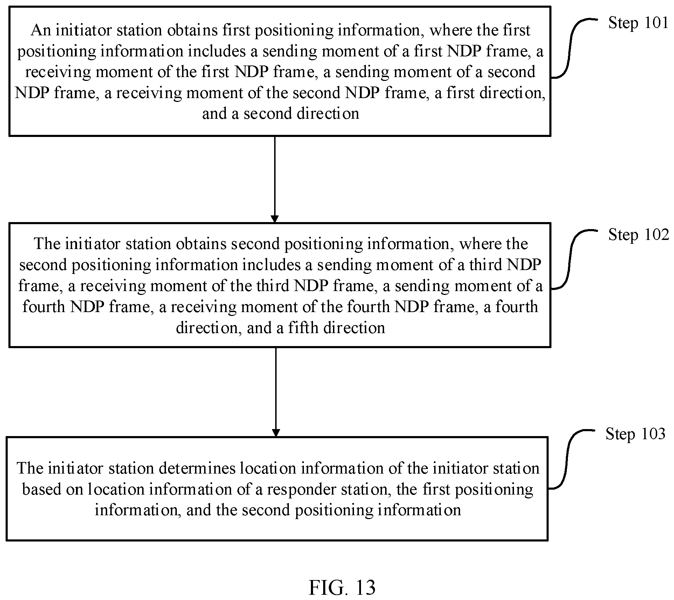

To make the objectives, technical solutions, and advantages of this invention clearer, the following further describes various implementations in detail with reference to the accompanying drawings. The invention concerns the implementations described with reference to figures 13-15C. The implementations described with reference to the other figures are not falling under the scope of the claims, they are included to help understanding the context of the invention. While the description refers to various implementations, the embodiments of the invention are those which comprise at least all the features of an independent claim.

A specific operation in a method implementation may also be applied to an apparatus implementation or a system implementation. In the descriptions of this application, unless otherwise specified, "a plurality of" means two or more than two. In addition, it should be understood that, in the descriptions of implementations of this application, terms such as "first" and "second" are only used for a purpose of distinction description, but cannot be understood as an indication or implication of relative importance, and cannot be understood as an indication or implication of an order.

A network architecture and service scenarios described in the implementations of this application are intended to describe the technical solutions in the implementations of this application more clearly, and do not constitute a limitation on the technical solutions provided in the implementations of this application. A person of ordinary skill in the art may learn that, with the evolution of the network architecture and the emergence of new service scenarios, the technical solutions provided in the implementations of this application are also applicable to similar technical problems.

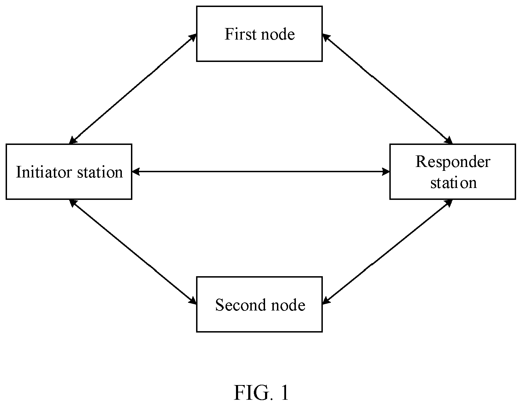

FIG. 1 is a schematic diagram of a possible network architecture to which an implementation of this application is applicable. As shown in FIG. 1, the network architecture includes an initiator station, a responder station, a first node, and a second node. The initiator station and the responder station may exchange information through reflection of a signal by the first node, may exchange information through reflection of a signal by the second node, or may directly exchange information. In the network architecture shown in FIG. 1, there may be a LOS or an NLOS between the initiator station and the responder station. This is not limited in this application. It should be noted that in FIG. 1, an example in which there is one initiator station, one responder station, one first node, and one second node is used for illustration. In actual application, in FIG. 1, there may be a plurality of initiator stations, responder stations, first nodes, and second nodes. Quantities of initiator stations, responder stations, first nodes, and second nodes are not limited in this application.

It should be understood that the initiator station in this implementation of this application may be a Wi-Fi device with an antenna array. The Wi-Fi device may include, for example, a station (station, STA) or an access point (access point, AP) with an antenna array. The STA may be, for example, an ISTA with an antenna array. In this application, the initiator station with an antenna array may control a direction of a transmit signal in a digital domain and an analog domain by using beamforming and directional antenna technologies, and may estimate an incident direction of an incident signal based on the incident signal received by the antenna array.

The responder station in this implementation of this application may be a Wi-Fi device with an antenna array. The Wi-Fi device may include, for example, a STA or anAP with an antenna array. The STA may be, for example, an RSTA with an antenna array. In this application, the responder station with an antenna array may control a direction of a transmit signal in a digital domain and an analog domain by using beamforming and directional antenna technologies, and may estimate an incident direction of an incident signal based on the incident signal received by the antenna array.

The first node and the second node in this implementation of this application are passive devices, or are active devices that work in a passive mode, and do not have a Wi-Fi communication capability. Some examples of the first node and the second node may include persons and objects.

To facilitate understanding of content in this application, the following first describes in detail FTM defined in the Wi-Fi standard 802.11az.

The FTM defined in the Wi-Fi standard 802.1 1az may include FTM in a trigger-based (trigger-based, TB) mode and FTM in a non-trigger-based (non-trigger-based, non-TB) mode. The following separately describes a procedure of the FTM in the TB mode and a procedure of the FTM in the non-TB mode.

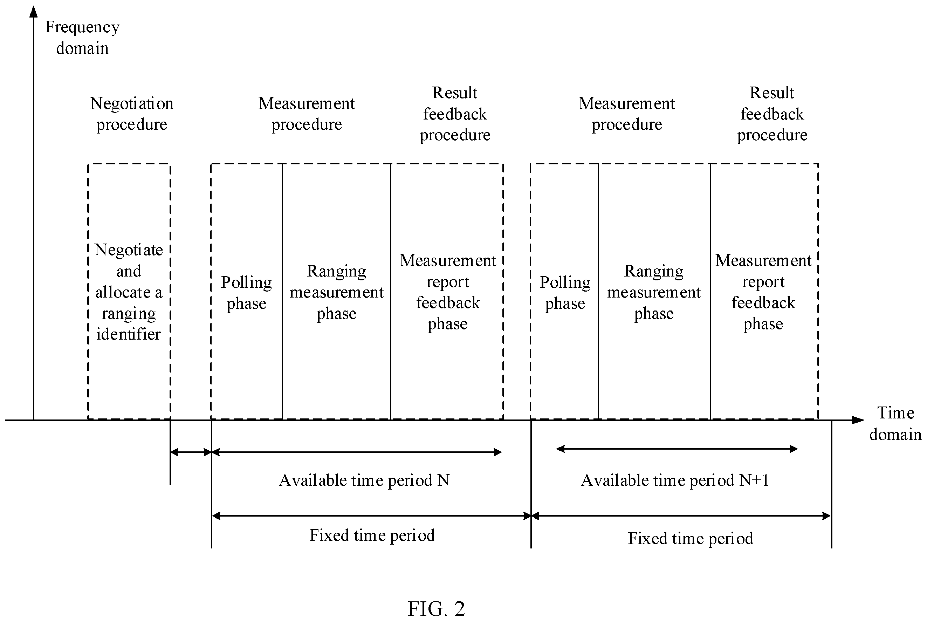

FIG. 2 shows the FTM in the TB mode.

As shown in FIG. 2, the FTM in the TB mode may include three procedures: a negotiation procedure, a measurement procedure, and a result feedback procedure. The following describes each procedure in detail.

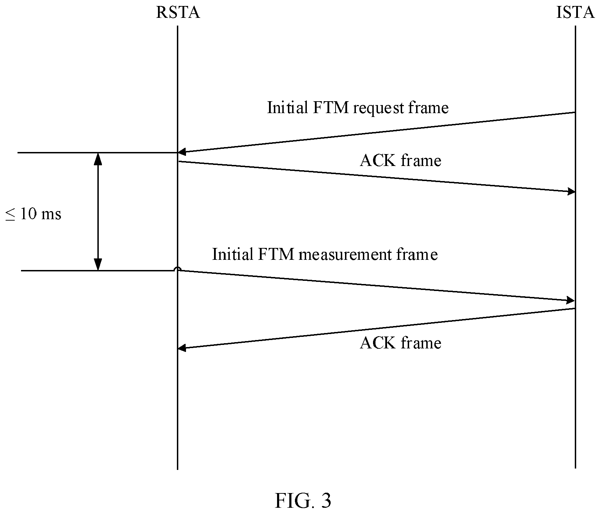

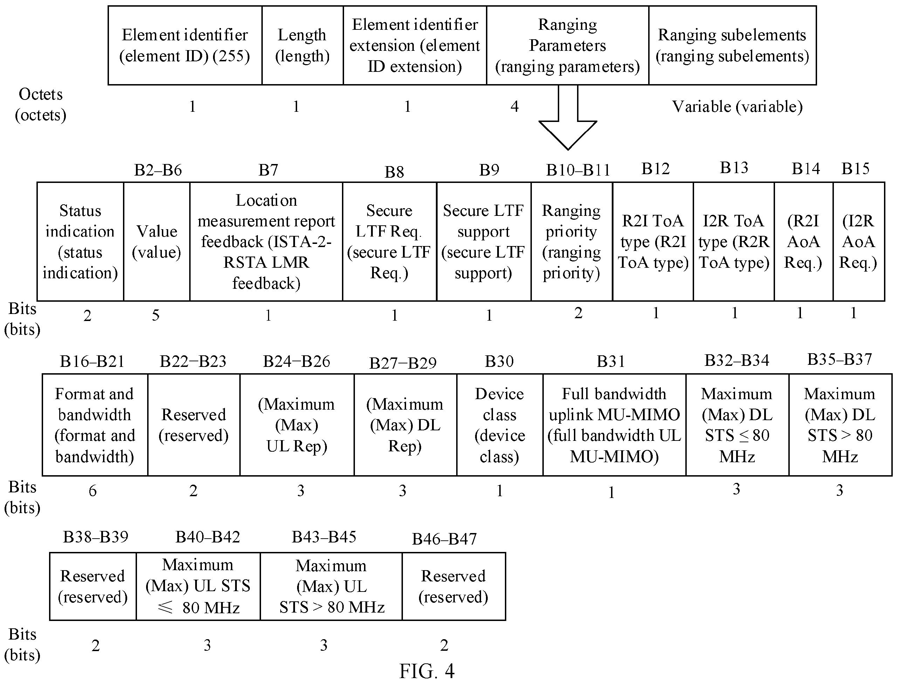

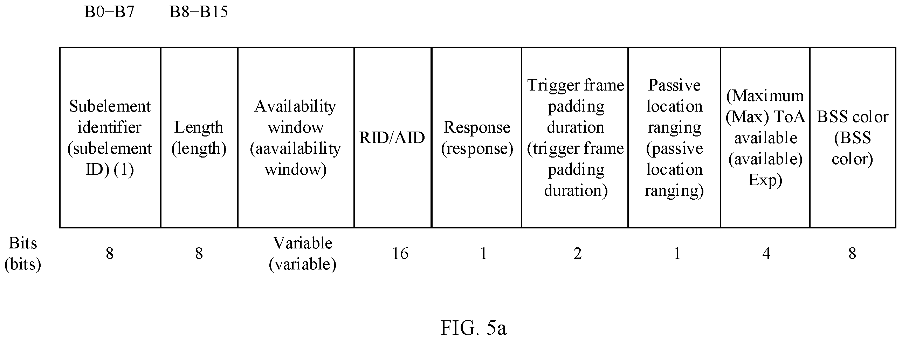

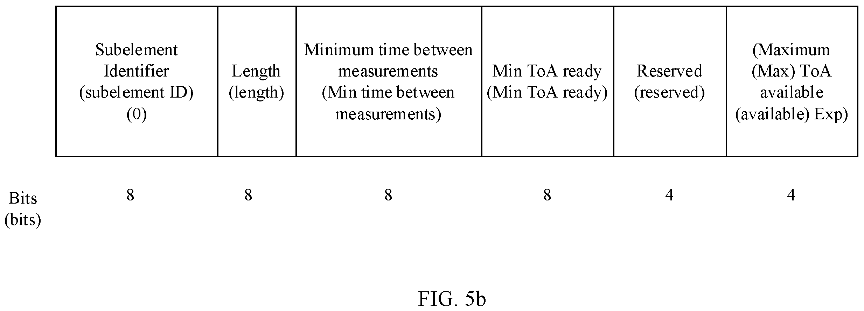

FIG. 3 shows a negotiation procedure of FTM. It should be noted that the negotiation procedure of the FTM is applicable to both the FTM in the TB mode and the FTM in the non-TB mode. In the negotiation procedure, when there is a measurement requirement, an ISTA sends an initial FTM request (initial FTM request) frame to an RSTA. If the RSTA can perform FTM, the RSTA may reply to the ISTA with an acknowledgment (ACK) frame after a short interframe space (SIFS) between two frames passes, and send an initial FTM measurement frame to the ISTA within 10 milliseconds in response to the initial FTM request frame. The initial FTM measurement frame may also be referred to as a response frame. Therefore, the negotiation process is completed. Each of the initial FTM request frame and the initial FTM measurement frame carries a ranging parameters element (ranging parameters element) field. The field is used to carry ranging information such as an available time period, capability information, and requirement information. FIG. 4 is a schematic diagram of a format of the ranging parameters element field. An encoding table of ranging subelements (ranging subelements) shown in FIG. 4 is shown in Table 1. FIG. 5a shows a specific format of a subelement (subelement) in the TB mode. FIG. 5b shows a specific format of a subelement (subelement) in the non-TB mode. For details, refer to FIG. 5a and FIG. 5b.

**Table 1**

| Subelement identifier (subelement ID) | Name (name) | Extensible (extensible) |
|---|---|---|
| 0 | Non-TB-specific subelement (non-TB-specific subelement) | Yes (yes) |
| 1 | TB-specific subelement (TB-specific subelement) | Yes (yes) |
| 2-220 | Reserved (reserved) | |
| 221 | Vendor-specific subelement (vendor-specific) | |
| 222-255 | Reserved (reserved) | |

It should be noted that if the ISTA is associated with the RSTA, the RSTA does not need to allocate a ranging identifier (ranging ID) to the ISTA in the negotiation procedure, and an associated identifier (associated ID) is used for interaction in the subsequent measurement process. If the ISTA is not associated with the RSTA, the RSTA may allocate a ranging ID to the ISTA in the negotiation procedure. The ranging ID is used to identify the ISTA in the subsequent measurement process.

It should be further noted that after the negotiation procedure is completed, a plurality of measurement procedures and result feedback procedures may be performed between the ISTA and the RSTA. That is, the ISTA and the RSTA do not need to perform the negotiation procedure each time before the measurement procedure and the result feedback procedure are performed.

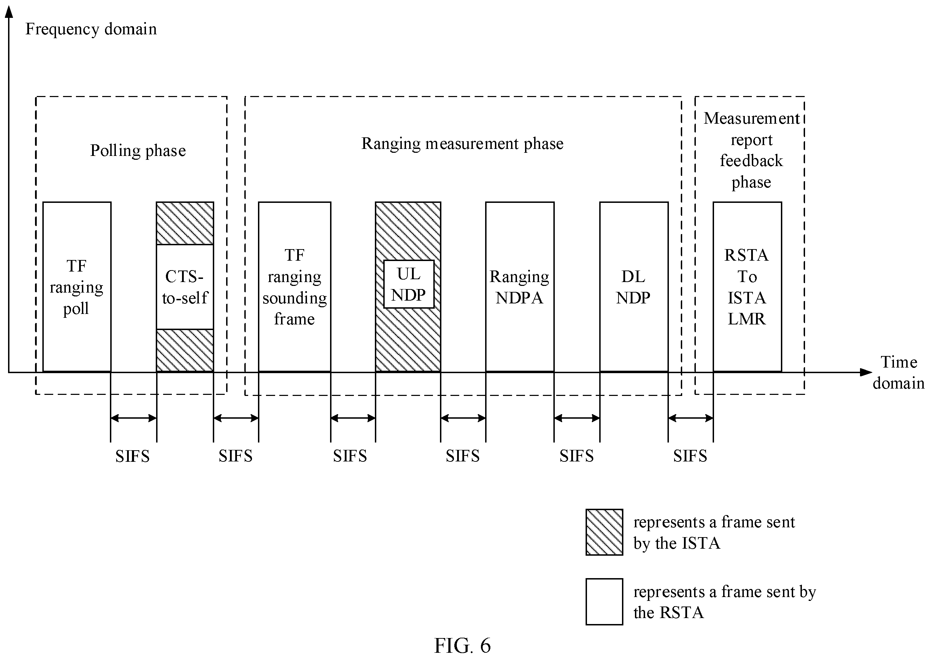

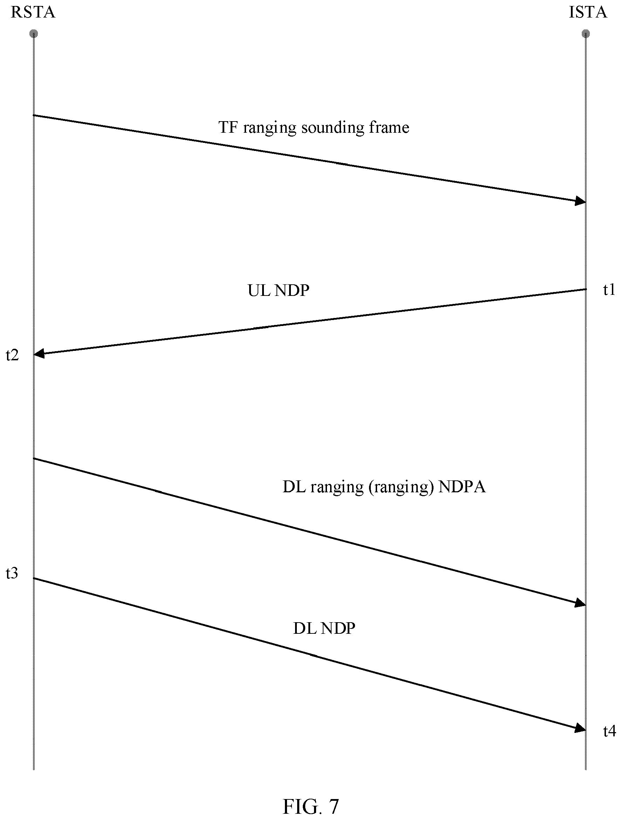

FIG. 6 shows the measurement procedure and the result feedback procedure in the TB mode. As shown in FIG. 6, the measurement procedure in the TB mode further includes a polling phase and a ranging measurement phase. In the polling phase, the RSTA sends a TF ranging poll (TF ranging poll) frame to the ISTA in an idle time window of the RSTA, to notify the ISTA that measurement can be started. After receiving the TF ranging poll frame sent by the RSTA, the ISTA sends a clear to send (clear to send, CTS)-to-self (CTS-to-self) frame to the RSTA to occupy a channel. FIG. 7 shows a specific ranging measurement process. In the ranging measurement phase, the RSTA sends a TF ranging sounding (TF ranging sounding) frame to the ISTA, to indicate the ISTA to start measurement. After receiving the TF ranging sounding frame for the SIFS, the ISTA may reply to the RSTA with an NDP frame, and record a sending moment t1 of the NDP frame. It should be noted that in this application, description is provided by using an example in which a direction from the ISTA to the RSTA is an uplink direction, and correspondingly, a direction from the RSTA to the ISTA is a downlink direction. In this case, the NDP frame sent by the ISTA to the RSTA may be described as an uplink (uplink, UL) NDP frame. After receiving the UL NDP frame, the RSTA records a receiving moment t2 of the UL NDP frame, and continues to send a downlink (downlink, DL) ranging NDP announcement (NDP announcement, NDPA) frame, which may also be referred to as a DL ranging NDPA frame, to the ISTA after the SIFS passes, to indicate the ISTA to continue measurement. After sending the DL ranging NDPA frame to the ISTA for the SIFS, the RSTA may continue to send a DL NDP frame to the ISTA, and record a sending moment t3 of the DL NDP frame. After receiving the DL NDP frame, the ISTA records a receiving moment t4 of the DL NDP frame. Therefore, the ranging measurement process is completed. After the ranging measurement process is completed, the result feedback procedure is performed. In the procedure, the RSTA may send a location measurement report (location measurement report, LMR) to the ISTA. The LMR may include the sending moment t1 of the UL NDP frame and the receiving moment t4 of the DL NDP frame.

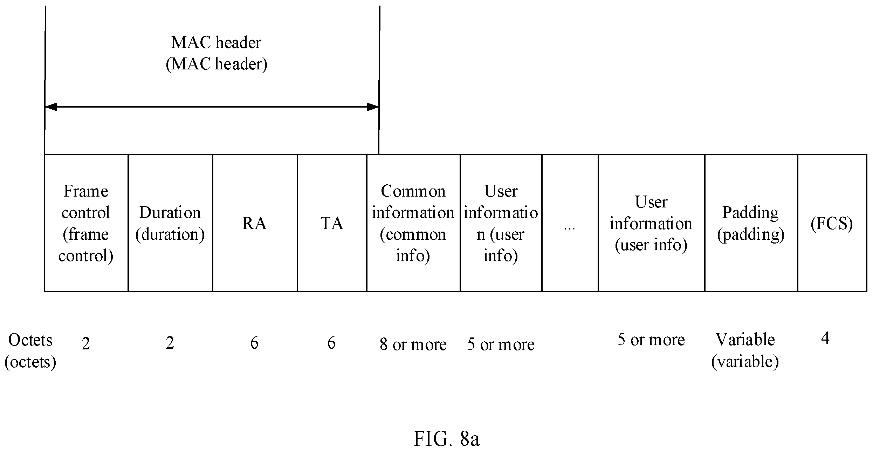

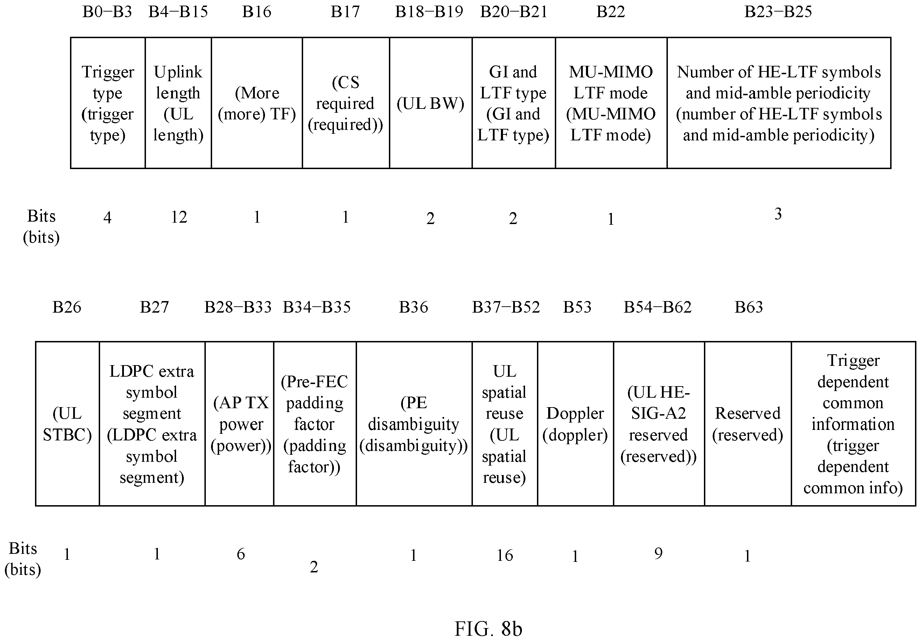

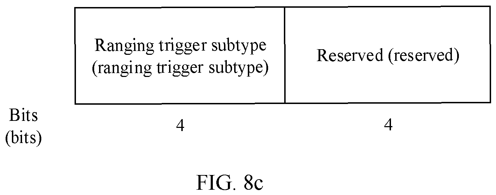

A structure of the TF ranging sounding frame in FIG. 7 may be shown in FIG. 8a. FIG. 8b shows a specific structure of common information (common info) included in the TF ranging sounding frame in FIG. 8a. FIG. 8c shows a specific structure of trigger dependent common information (trigger dependent common info) in FIG. 8b. Encoding of a trigger type (trigger type) in FIG. 8b is shown in Table 2.

**Table 2**

| Trigger type subfield value (trigger type subfield value) | Trigger frame variant (trigger frame variant) |
|---|---|
| 0 | Basic (basic) |
| 1 | Beamforming report poll (beamforming report poll (BFRP)) |
| 2 | MU-BAR |
| 3 | MU-RTS |

(continued)

| Trigger type subfield value (trigger type subfield value) | Trigger frame variant (trigger frame variant) |
|---|---|
| 4 | Buffer status report poll (buffer status report poll (BSRP)) |
| 5 | GCR MU-BAR |
| 6 | Bandwidth query report poll (bandwidth query report poll (BQRP)) |
| 7 | NDP feedback report poll (NDP feedback report poll (NFRP)) |
| 8 | Ranging (ranging) |
| 9-15 | Reserved (reserved) |

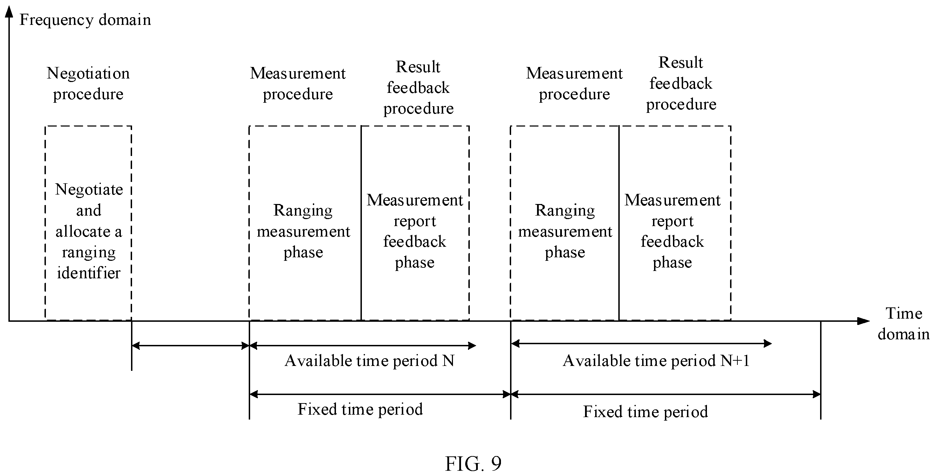

FIG. 9 shows the FTM in the non-TB mode.

As shown in FIG. 9, the FTM in the non-TB mode may also include three procedures: a negotiation procedure, a measurement procedure, and a result feedback procedure. It should be noted that compared with the measurement procedure in the TB mode, the measurement procedure in the non-TB mode does not include a polling phase. The following describes each procedure of the FTM in the non-TB mode in detail.

As described above, the negotiation procedure of the FTM shown in FIG. 3 is applicable to both the FTM in the TB mode and the FTM in the non-TB mode. That is, the negotiation procedure in the non-TB mode is similar to the negotiation procedure in the TB mode. For details, refer to FIG. 3 and related description in FIG. 3. Details are not described herein.

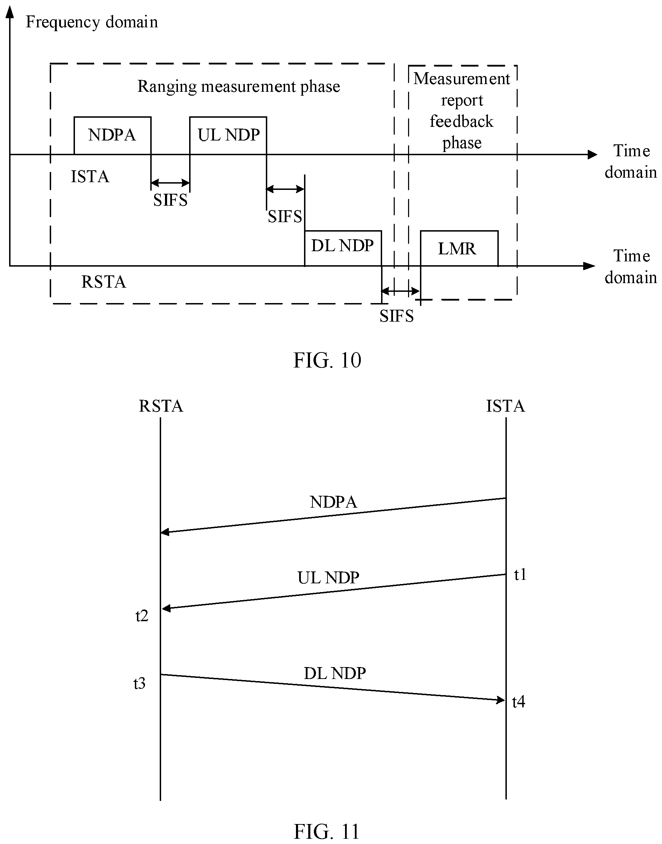

FIG. 10 shows the measurement procedure and the result feedback procedure in the non-TB mode. As shown in FIG. 10, the measurement procedure in the non-TB mode includes a ranging measurement phase. FIG. 11 shows a specific ranging measurement process in the non-TB mode. In the ranging measurement phase, an ISTA first sends an NDPA frame to an RSTA, to indicate the RSTA to start measurement. After sending the NDPA frame to the RSTA for an SIFS, the ISTA may continue to send an NDP frame to the RSTA, and record a sending moment t1 of the NDP frame. It should be noted that in this application, description is provided by using an example in which a direction from the ISTA to the RSTA is an uplink direction, and correspondingly, a direction from the RSTA to the ISTA is a downlink direction. In this case, the NDP frame sent by the ISTA to the RSTA may be described as a UL NDP frame. After receiving the UL NDP frame sent by the ISTA, the RSTA records a receiving moment t2 of the UL NDP frame, replies to the ISTA with a DL NDP frame after the SIFS passes, and records a sending moment t3 of the DL NDP frame. After receiving the DL NDP frame, the ISTA records a receiving moment t4 of the DL NDP frame. Therefore, the ranging measurement process is completed. After the ranging measurement process is completed, the result feedback procedure is performed. In the procedure, the RSTA may send an LMR to the ISTA. The LMR may include the sending moment t1 of the UL NDP frame and the receiving moment t4 of the DL NDP frame.

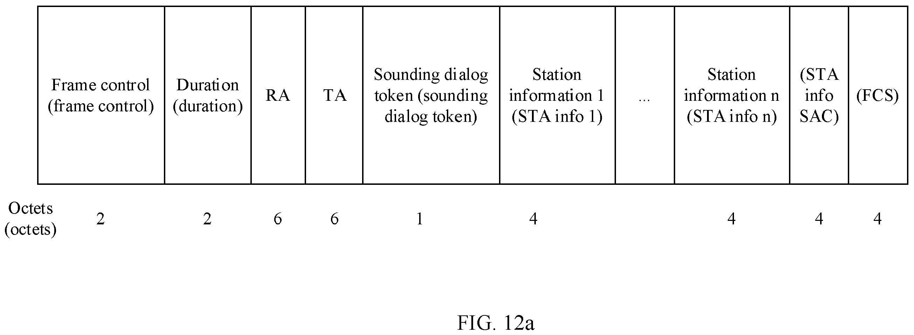

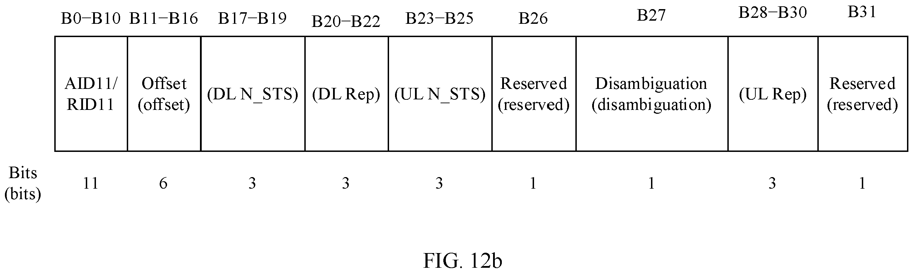

A structure of the NDPA frame in FIG. 11 may be shown in FIG. 12a. FIG. 12b shows a specific structure of a station information (STA info) field included in the NDPA frame in FIG. 12a.

It should be noted that regardless of in the FTM in the TB mode or the FTM in the non-TB mode, a frame exchanged in a process of performing measurement is a frame that is omnidirectionally sent.

Based on the network architecture shown in FIG. 1, a principle of determining a location of an ISTA based on FTM in the conventional technology is described by using an example in which the initiator station is an ISTA with an unknown location and a responder station is an RSTA with a known location. Regardless of whether the location of the ISTA is determined by using the FTM in the TB mode or the FTM in the non-TB mode, four times, for example, t1, t2, t3, and t4 in FIG. 7 and FIG. 11, can be obtained in a process of performing the FTM. Then, an RTT in which a signal is propagated between the ISTA and the RSTA may be determined based on the four times, and may be specifically determined by using the following formula:

$$RTT = [(t4 - t1) - (t3 - t2)].$$

A propagation distance of the signal between the ISTA and the RSTA may be further calculated based on a propagation speed of an electromagnetic wave and the RTT. When there is a LOS between the ISTA and the RSTA, the calculated propagation distance of the signal is a distance between the ISTA and the RSTA. The propagation distance D of the signal between the ISTA and the RSTA may be specifically calculated by using the following formula:

$$D = \frac{RTT * c}{2},$$

where c is a speed of light.

If there is a LOS between the ISTA and the RSTA, it may be determined that D is the distance between the ISTA and the RSTA. When the location of the ISTA is determined based on the FTM, the ISTA needs to perform the foregoing process with at least three RSTAs with known locations, to obtain a distance between the ISTA and each RSTA, and then may determine the location of the ISTA based on a trilateral measurement technology.

It may be learned from the foregoing description that in the conventional technology, when the location of the ISTA is determined based on the FTM, distances between the ISTA and at least three RSTAs first need to be determined based on the FTM, and a round trip time of a signal between the ISTA and the RSTA needs to be determined before the distance between the ISTA and the RSTA is determined. However, if there is an NLOS between the ISTA and the RSTA, that is, when there is an obstacle between the ISTA and the RSTA, the ISTA and the RSTA cannot directly exchange an NDP frame, and the round trip time of the signal between the ISTA and the RSTA cannot be obtained, and consequently the distance between the ISTA and the RSTA cannot be determined. In this case, the method for determining the location of the ISTA based on the FTM is inapplicable.

In view of the foregoing problem, the implementations of this application provide a positioning method, to implement positioning in both a LOS scenario and an NLOS scenario.

FIG. 13 shows a positioning method according to an implementation of this application. The method may be applied to the network architecture shown in FIG. 1. Certainly, the method provided in this application is not limited to being applied to the network architecture shown in FIG. 1, and may be applied to another network architecture. Referring to FIG. 13, the method may include the following processing procedure.

Step 101: An initiator station obtains first positioning information, where the first positioning information includes a sending moment of a first NDP frame, a receiving moment of the first NDP frame, a sending moment of a second NDP frame, a receiving moment of the second NDP frame, a first direction, and a second direction.

The first NDP frame is a frame that is sent by the initiator station in the first direction and that is reflected to a responder station by a first node. The second direction is an incident direction in which the first NDP frame is reflected to the responder station by the first node. The second NDP frame is a frame that is sent by the responder station in a third direction and that is reflected to the initiator station by the first node. The third direction is opposite to the second direction.

How the initiator station obtains the first positioning information is not limited in this implementation of this application. For example, the initiator station may determine the first positioning information, or may receive the first positioning information from the responder station, or may determine a part of content included in the first positioning information, and receive the other part of content included in the first positioning information from the responder station.

Step 102: The initiator station obtains second positioning information, where the second positioning information includes a sending moment of a third NDP frame, a receiving moment of the third NDP frame, a sending moment of a fourth NDP frame, a receiving moment of the fourth NDP frame, a fourth direction, and a fifth direction. In this implementation of this application, the fourth direction and the first direction are different directions.

The third NDP frame is a frame that is sent by the initiator station in the fourth direction and that is reflected to the responder station by a second node. The fifth direction is an incident direction in which the third NDP frame is reflected to the responder station by the second node. The fourth NDP frame is a frame that is sent by the responder station in a sixth direction and that is reflected to the initiator station by the second node. The sixth direction is opposite to the fifth direction.

How the initiator station obtains the second positioning information is not limited either in this implementation of this application. For example, the initiator station may determine the second positioning information, or may receive the second positioning information from the responder station, or may determine a part of content included in the second positioning information, and receive the other part of content included in the second positioning information from the responder station.

Step 103: The initiator station determines location information of the initiator station based on location information of the responder station, the first positioning information, and the second positioning information. The location information of the responder station in step 103 may be obtained by the initiator station from the responder station in advance and locally stored in the initiator station, or may be obtained by the initiator station from the responder station in real time. This is not limited in this application.

It should be noted that in this application, an example in which a measurement frame is an NDP frame is used for illustration. Actually, any measurement frame used for channel sounding is applicable to the method in this application. A person skilled in the art may know that the NDP frame is merely used as a name of the measurement frame, and the name of the measurement frame is not limited in this application.

In this implementation of this application, description is provided by using an example in which the initiator station determines the location information of the initiator station. Actually, any node that obtains the first positioning information, the second positioning information, and a location of the responder station may determine the location information of the initiator station. For example, the initiator station may send the first positioning information and the second positioning information to the responder station, and the responder station determines the location information of the initiator station based on the location information of the responder station, the first positioning information, and the second positioning information. Certainly, the initiator station may send the first positioning information and the second positioning information to a node other than the responder station, to determine the location information of the initiator station. It should be noted that when the location information of the initiator station is determined by a third-party node other than the responder station and the initiator station, the third-party node further needs to obtain the location information of the responder station. For example, the third-party node may receive the location information of the responder station from the responder station, or may receive the location information of the responder station from the initiator station, or certainly may obtain the location information of the responder station in another manner. This is not limited in this application. Different from a case in which another node (for example, the responder station or the third-party node) determines the location information of the initiator station, in this application, the initiator station determines the location information of the initiator station. In this way, a location of the initiator station can be prevented from leakage, there is higher security, and privacy of the initiator station can be protected.

In the foregoing method, even if there is an NLOS between the initiator station and the responder station, the initiator station and the responder station may still exchange an NDP frame through reflection by the first node or the second node, may obtain positioning information by exchanging the NDP frame, and then may determine the location information of the initiator station based on the positioning information. In addition, the first node and the second node in this application may be passive devices. That is, in this application, the to-be-positioned initiator station may determine the location information by interacting with only one responder station with a known location. Compared with the conventional technology in which a to-be-positioned node needs to interact with at least three responder stations with known locations to determine a location of the to-be-positioned node, the method in this application is easy to implement. Definitely, even if there is a LOS between the initiator station and the responder station, the initiator station and the responder station may exchange an NDP frame through reflection by the first node or the second node, may obtain positioning information by exchanging the NDP frame, and then may determine the location information of the initiator station based on the positioning information. In other words, the method in this application is applicable to both a case in which there is a LOS between the two stations and a case in which there is an NLOS between the two stations.

How to determine the location information of the initiator station is not limited in this application. In a possible example, the initiator station determines a first distance based on the sending moment of the first NDP frame, the receiving moment of the first NDP frame, the sending moment of the second NDP frame, and the receiving moment of the second NDP frame, where the first distance is a sum of a distance between the initiator station and the first node and a distance between the first node and the responder station, the initiator station determines a second distance based on the sending moment of the third NDP frame, the receiving moment of the third NDP frame, the sending moment of the fourth NDP frame, and the receiving moment of the fourth NDP frame, where the second distance is a sum of a distance between the initiator station and the second node and a distance between the second node and the responder station, and then the initiator station determines the location information of the initiator station based on the location information of the responder station, the first distance, the second distance, the first direction, the second direction, the fourth direction, and the fifth direction.

In a possible implementation, the sending node may determine the first distance based on the sending moment of the first FTM frame, the receiving moment of the first FTM frame, the sending moment of the second FTM frame, and the receiving moment of the second FTM frame by using the following formula:

$$\text{First distance} = \frac{t4 - t1 - (t3 - t2)}{2} * c,$$

, where

t1 is the sending moment of the first FTM frame, t2 is the receiving moment of the first FTM frame, t3 is the sending moment of the second FTM frame, t4 is the receiving moment of the second FTM frame, and c is a speed of light. Optionally, the first distance may be calculated by using equivalent deformation of the foregoing formula.

The sending node may determine the second distance based on the sending moment of the third FTM frame, the receiving moment of the third FTM frame, the sending moment of the fourth FTM frame, and the receiving moment of the fourth FTM frame by using the following formula:

$$\text{Second distance} = \frac{t8 - t5 - (t7 - t6)}{2} * c,$$

where
t5 is the sending moment of the third FTM frame, t6 is the receiving moment of the third FTM frame, t7 is the sending moment of the fourth FTM frame, and t8 is the receiving moment of the fourth FTM frame. Optionally, the second distance may be calculated by using equivalent deformation of the foregoing formula.

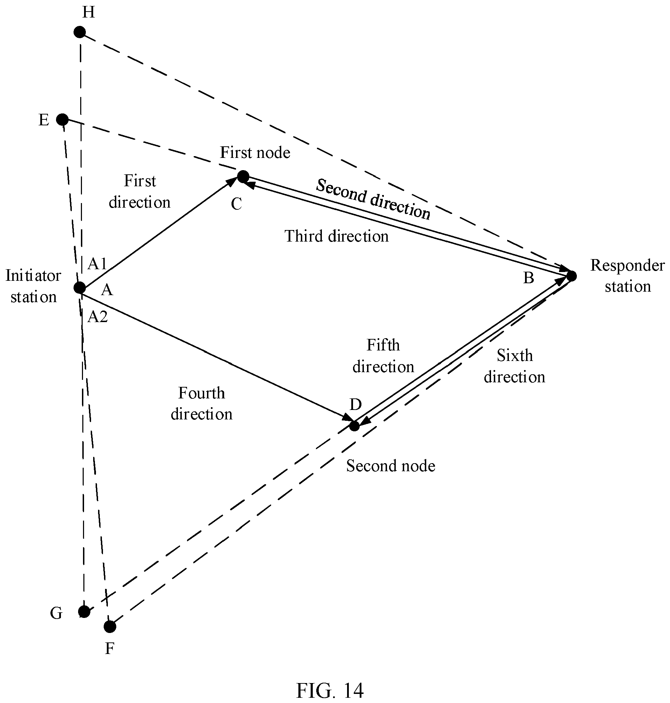

Further, how to determine the location information of the initiator station based on the location information of the responder station, the first distance, the second distance, the first direction, the second direction, the fourth direction, and the fifth direction is not limited in this application. A method for determining the location information of the initiator station by using a geometrical relationship is provided in this application. Detailed description is provided in FIG. 14.

FIG. 14 shows a method for determining location information of an initiator station according to an implementation of this application. In FIG. 14, an example in which the location information is a coordinate location is used for illustration. For ease of description, all nodes are marked as points in a coordinate system in FIG. 14. As shown in FIG. 14, the initiator station is marked as a point A, the responder station is marked as a point B, the first node is marked as a point C, and the second node is marked as a point D. The point A has an unknown location, and the point B has a known location. The following describes a principle of determining the location information of the initiator station by using the geometrical relationship.

It may be learned from FIG. 14 that the first distance is a sum of a length of a line segment AC and a length of a line segment BC. The length of the line segment AC is a distance between the point A and the point C, namely, the distance between the initiator station and the first node. The length of the line segment BC is a distance between the point B and the point C, namely, the distance between the responder station and the first node. The second distance is a sum of a length of a line segment AD and a length of a line segment BD. The length of the line segment AD is a distance between the point A and the point D, namely, the distance between the initiator station and the second node. The length of the line segment BD is a distance between the point B and the point D, namely, the distance between the responder station and the second node.

The point B is used as a starting point, a line segment BE is made in a BC direction (namely, an opposite direction of the second direction), and it is set that a length of the line segment BE is equal to the first distance. In addition, the point B is used as a starting point, a line segment BF parallel to AC is made in an opposite direction of the first direction, and it is set that a length of the line segment BF is equal to the first distance. A point E and a point F are connected, and it may be further determined that the point A is on a line segment EF. The following proves, based on a geometrical relationship, that the point A is on the line segment EF. It is assumed that the line segment AC intersects with the line segment EF at a point A1. Definitely, if it can be proved that the point A coincides with the point A1, it can be determined that the point A is on the line segment EF. The following proves that the point A is on the line segment EF.

It may be learned from the foregoing content that the line segment BE is equal to the line segment BF, and therefore a triangle BEF is an isosceles triangle. Therefore, it can be deduced that an angle BEF is equal to an angle BFE. CA1 is parallel to BF, and therefore it can be deduced that an angle EA1C is equal to the angle BFE, and it can be further deduced that the angle EA1C is equal to the angle BEF and an angle BEA1. Therefore, a triangle CEA1 is an isosceles triangle, and it can be deduced that a length of a line segment CE is equal to a length of a line segment CA1. In addition, the length of the line segment BE is equal to the first distance, that is, the length of the line segment BE is equal to the length of the line segment AC plus the length of the line segment BC, and the length of the line segment BE is also equal to the length of the line segment BC plus the length of the line segment CE. Therefore, it can be deduced that the length of the line segment AC is equal to the length of the line segment CE. In conclusion, it can be deduced that the length of the line segment CA1 is equal to the length of the line segment AC. Further, a direction of the line segment CA1 is the same as a direction of the line segment AC, and therefore it can be proved that the point A coincides with the point A1 and the point A is on the line segment EF.

Similarly, the point B is used as a starting point, a line segment BG is made in a BD direction (namely, an opposite direction of the fifth direction), and it is set that a length of the line segment BG is equal to the second distance. In addition, the point B is used as a starting point, a line segment BH parallel to AD is made in an opposite direction of the fourth direction, and it is set that a length of the line segment BH is equal to the second distance. A point G and a point H are connected, and it may be determined that the point A is on a line segment GH. It is assumed that the line segment AD intersects with the line segment GH at a point A2. Definitely, if it can be proved that the point A coincides with the point A2, it can be determined that the point A is on the line segment GH. A method the same as that for proving that the point A is on the line segment EF may be used to prove that the point A is on the line segment GH. Details are not described herein.

For example, the location information is a two-dimensional coordinate location. It is assumed that the location of the initiator station A is denoted as $(x_A, y_A)$, the location of the responder station B is denoted as $(x_B, y_B)$, a location of the point E is denoted as $(x_E, y_E)$, a location of the point F is denoted as $(x_F, y_F)$, a location of the point G is denoted as $(x_G, y_G)$, a location of the point H is denoted as $(x_H, y_H)$, a $k^{th}$ distance is denoted as $L_k$ (k=1 or 2), and a $k^{th}$ direction is denoted as $\theta_k$ (k=1, 2, 4, or 5). It should be noted that herein, the first distance is the first distance determined above, the second distance is the second distance determined above, the first direction is the foregoing first direction, the second direction is the foregoing second direction, the fourth direction is the foregoing fourth direction, and the fifth direction is the foregoing fifth direction. In this case, location coordinates of the points E, F, G, and H may be obtained based on the following formulas:

$$(x_E, y_E) = (x_B - L_1 * \cos \theta_2, y_B - L_1 * \sin \theta_2);$$

$$(x_F, y_F) = (x_B - L_1 * \cos \theta_1, y_B - L_1 * \sin \theta_1);$$

$$(x_G, y_G) = (x_B - L_2 * \cos \theta_5, y_B - L_2 * \sin \theta_5);$$

and

$$(x_H, y_H) = (x_B - L_2 * \cos \theta_4, y_B - L_2 * \sin \theta_4).$$

The location of the initiator station A is an intersection point of the line segments EF and GH, and therefore location coordinates of the initiator station A meet the following two formulas:

$$\frac{y_A - y_E}{x_A - x_E} = \frac{y_F - y_E}{x_F - x_E};$$

and

$$\frac{y_A - y_G}{x_A - x_G} = \frac{y_G - y_H}{x_G - x_H}.$$

Therefore, the location coordinates of the initiator station A can be calculated based on the foregoing two formulas.

In conclusion, the initiator station may determine, based on the first distance, the second distance, the first direction, the second direction, the fourth direction, and the fifth direction, that the point A (namely, the initiator station) is the intersection point of the line segment EF and the line segment GH, and may further determine the location information of the initiator station (for example, the coordinates of the initiator station) based on the location information of the responder station (for example, coordinates of the responder station), the first distance, and the second distance.

It should be noted that in this application, description is mainly provided by using an example in which the method is performed by using two nodes, namely, the first node and the second node. Actually, the method may be performed by at least two nodes to determine the location information of the initiator station.

In this implementation of this application, after determining the location information of the initiator station, the initiator station may further determine location information of the first node and/or location information of the second node. For example, the initiator station may determine the location information of the first node based on the location information of the responder station, the location information of the initiator station, a first angle of departure (angle of departure, AoD) corresponding to the first direction, and a first angle of arrival (angle of arrival, AoA) corresponding to the second direction. For example, the initiator station may determine the location information of the second node based on the location information of the responder station, the location information of the initiator station, a second AoD corresponding to the fourth direction, and a second AoA corresponding to the fifth direction. In the method provided in this application, positioning can be performed for both the initiator station and a passive node or a node that works in a passive mode. For example, positioning is performed for the first node and the second node. In addition, in the method in this application, a problem, in the conventional technology, that currently positioning cannot be implemented for a passive node or a node that works in a passive mode is resolved.

The first direction may be understood as a departure direction in which the first NDP frame departs from the initiator station during transmission of the first NDP frame. When the departure direction is expressed by an angle, the departure direction may be described as an angle of departure (angle of departure, AoD). In this application, the first AoD corresponding to the first direction is a first direction described by an angle. Similarly, the second direction may be understood as an incident direction in which the first NDP frame is reflected to the responder station by the first node during receiving of the first NDP frame. When the incident direction is expressed by an angle, the incident direction may be described as an angle of arrival (angle of arrival, AoA). In this application, the first AoA corresponding to the second direction is a second direction described by an angle. Similarly, the fourth direction may be understood as a departure direction in which the third NDP frame departs from the initiator station during transmission of the third NDP frame. When the departure direction is expressed by an angle, the departure direction may be described as an AoD. In this application, the second AoD corresponding to the fourth direction is a fourth direction described by an angle. Similarly, the fifth direction may be understood as an incident direction in which the third NDP frame is reflected to the responder station by the second node during receiving of the third NDP frame. When the incident direction is expressed by an angle, the incident direction may be described as an AoA. In this application, the second AoA corresponding to the fifth direction is a fifth direction described by an angle.

How to determine the location information of the first node based on the location information of the responder node, the location information of the sending node, the first AoD, and the first AoA is not limited in this application. In a possible implementation, for example, the location information is location coordinates, and the initiator station may determine location coordinates of the first node by using the following formula:

$$x = \frac{x1 * \tan(\text{first AoD}) + x2 * \tan(\text{first AoA}) + y2 - y1}{\tan(\text{first AoA}) + \tan(\text{first AoD})}$$

$$y = \frac{(y1 + x2 - x1) * \tan(\text{first AoA}) + y2 * \tan(\text{first AoD})}{\tan(\text{first AoA}) + \tan(\text{first AoD})},$$

where

(x1, y1) are the location coordinates of the sending node, (x2, y2) are location coordinates of the responder station, and (x, y) are the location coordinates of the first node.

How to determine the location information of the second node based on the location information of the receiving node, the location information of the sending node, the second AoD, and the second AoA is not limited in this application. In a possible implementation, for example, the location information is location coordinates, and the initiator station may determine location coordinates of the second node by using the following formula:

$$x' = \frac{x1 * \tan(\text{second AoD}) + x2 * \tan(\text{second AoA}) + y2 - y1}{\tan(\text{second AoA}) + \tan(\text{second AoD})}$$

$$y' = \frac{(y1 + x2 - x1) * \tan(\text{second AoA}) + y2 * \tan(\text{second AoD})}{\tan(\text{second AoA}) + \tan(\text{second AoD})},$$

where

(x1, y1) are the location coordinates of the sending node, (x2, y2) are the location coordinates of the responder station, and (x', y') are the location coordinates of the second node.

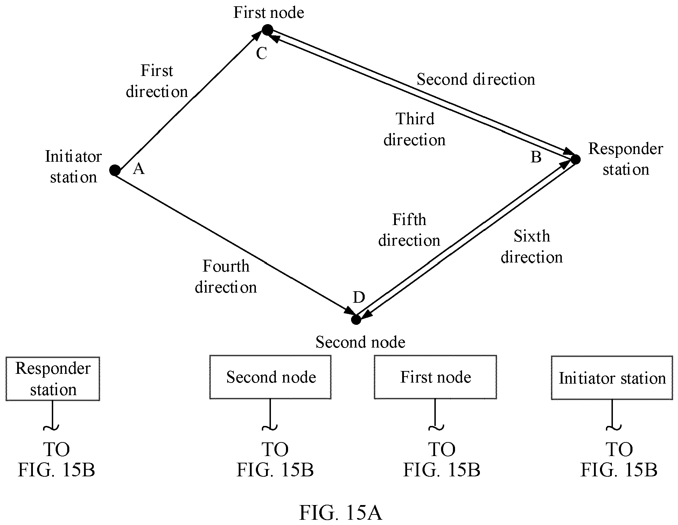

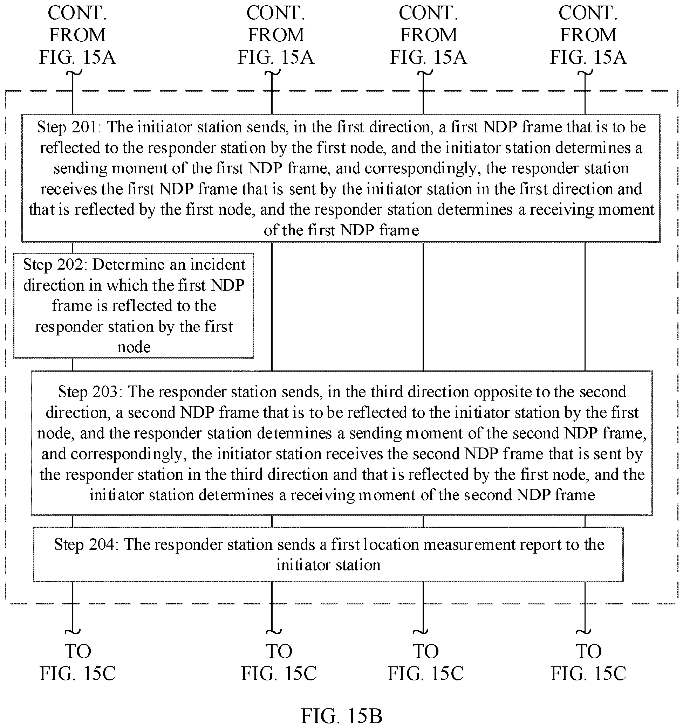

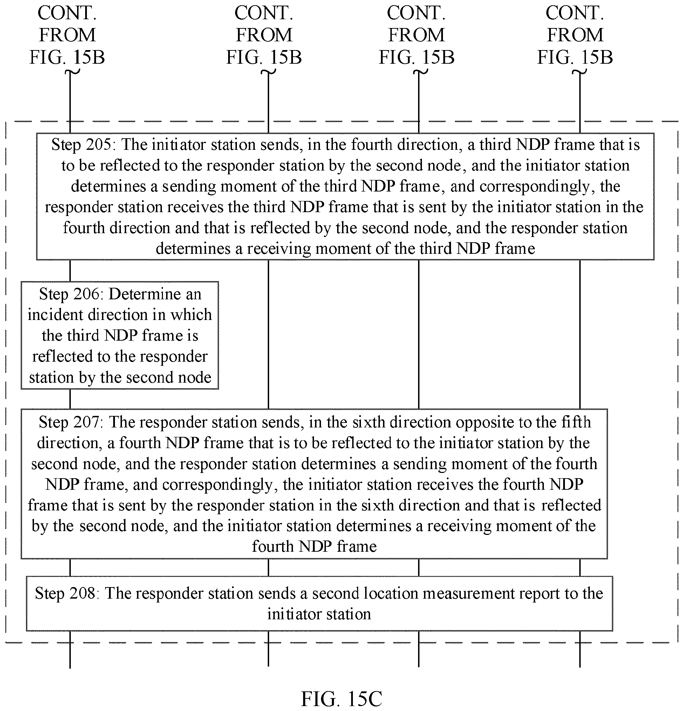

In the following implementations of this application, the foregoing method for obtaining the first positioning information and the second positioning information is further described by using an example in which the initiator station determines a part of content included in the first positioning information, and receives the other part of content included in the first positioning information from the responder station, and the initiator station determines a part of content included in the second positioning information, and receives the other part of content included in the second positioning information from the responder station. FIG. 15A, FIG. 15B, and FIG. 15C show a measurement method according to an implementation of this application. The method may be applied to but is not limited to being applied to the network architecture shown in FIG. 1. Referring to FIG. 15A, FIG. 15B, and FIG. 15C, the method may include the following processing procedure.

Step 201: An initiator station sends, in a first direction, a first NDP frame that is to be reflected to a responder station by a first node, and the initiator station determines a sending moment of the first NDP frame, and correspondingly, the responder station receives the first NDP frame that is sent by the initiator station in the first direction and that is reflected by the first node, and the responder station determines a receiving moment of the first NDP frame.

Location information is usually location information of a point. Therefore, in this application, for ease of description, all nodes are marked as points in a coordinate system. As shown in FIG. 15A, FIG. 15B, and FIG. 15C, the initiator station is marked as a point A, the responder station is marked as a point B, the first node is marked as a point C, and a second node is marked as a point D. The point A has an unknown location, and the point B has a known location.

In this implementation of this application, the initiator station may adjust a phase and amplitude of transmitting a signal by each antenna in an antenna array, so that first NDP frames that are sent are enhanced in the first direction and are mutually offset in other directions. Alternatively, the initiator station may directly transmit the first NDP frame in the first direction by using a directional antenna.

It should be noted that how to select the first node is not limited in this application. Before initiating step 201, the initiator station may detect the target object in different directions until an available first node is detected in the first direction, and then may perform step 201. A detection technology for detecting the target object is not limited in this application.

Step 202: After receiving the first NDP frame that is sent by the initiator station in the first direction and that is reflected by the first node, the responder station determines an incident direction, namely, a second direction, in which the first NDP frame is reflected to the responder station by the first node.

In this implementation of this application, the responder station may calculate the second direction by using an antenna array based on a time difference of arrival of different antenna signals, or obtain the second direction through inference by using a directional antenna based on a direction of a strongest received signal. This is not limited.

Step 203: The responder station sends, in a third direction opposite to the second direction, a second NDP frame that is to be reflected to the initiator station by the first node, and the responder station determines a sending moment of the second NDP frame, and correspondingly, the initiator station receives the second NDP frame that is sent by the responder station in the third direction and that is reflected by the first node, and the initiator station determines a receiving moment of the second NDP frame.

Step 204: The responder station sends a first location measurement report to the initiator station, and correspondingly, the initiator station receives the first location measurement report from the responder station, where the first location measurement report includes the receiving moment of the first NDP frame, the sending moment of the second NDP frame, and the second direction.

Fine time measurement is performed in step 201 to step 204. All NDP frames exchanged between the initiator station and the responder station are frames sent in a specific direction, and therefore in this application, step 201 to step 204 may be understood as a directional fine time measurement process.

Step 205: The initiator station sends, in a fourth direction, a third NDP frame that is to be reflected to the responder station by the second node, and the initiator station determines a sending moment of the third NDP frame, and correspondingly, the responder station receives the third NDP frame that is sent by the initiator station in the fourth direction and that is reflected by the second node, and the responder station determines a receiving moment of the third NDP frame.

In this implementation of this application, the initiator station may adjust the phase and amplitude of transmitting a signal by each antenna in the antenna array, so that third NDP frames that are sent are enhanced in the fourth direction and are mutually offset in other directions. Alternatively, the initiator station may directly transmit the third NDP frame in the fourth direction by using the directional antenna.

It should be noted that how to select the second node is not limited in this application. Before initiating step 205, the initiator station may detect the target object in different directions until an available second node is detected in the fourth direction, and then may perform step 205. A detection technology for detecting the target object is not limited in this application. In addition, in this application, the fourth direction is a detection direction different from the first direction.

Step 206: After receiving the third NDP frame that is sent by the initiator station in the fourth direction and that is reflected by the second node, the responder station determines an incident direction, namely, a fifth direction, in which the third NDP frame is reflected to the responder station by the second node.

In this implementation of this application, the responder station may calculate the fifth direction by using the antenna array based on the time difference of arrival of the different antenna signals, or obtain the fifth direction through inference by using the directional antenna based on the direction of the strongest received signal. This is not limited.

Step 207: The responder station sends, in a sixth direction opposite to the fifth direction, a fourth NDP frame that is to be reflected to the initiator station by the second node, and the responder station determines a sending moment of the fourth NDP frame, and correspondingly, the initiator station receives the fourth NDP frame that is sent by the responder station in the sixth direction and that is reflected by the second node, and the initiator station determines a receiving moment of the fourth NDP frame.

Step 208: The responder station sends a second location measurement report to the initiator station, and correspondingly, the initiator station receives the second location measurement report from the responder station, where the second location measurement report includes the receiving moment of the third NDP frame, the sending moment of the fourth NDP frame, and the fifth direction.

Correspondingly, fine time measurement is also performed in step 205 to step 208. All NDP frames exchanged between the initiator station and the responder station are frames sent in a specific direction, and therefore in this application, step 205 to step 208 may also be understood as a directional fine time measurement process. It should be noted that in this implementation of this application, the first direction and the fourth direction are different directions, and therefore in this application, step 201 to step 204 and step 205 to step 208 are two different directional fine time measurement processes.

It should be noted that the positioning method provided in this application is described above by using an example in which the initiator station has an unknown location and the responder station has a known location. When the initiator station has a known location and the responder station has an unknown location, the positioning method provided in this application is still applicable. How to determine a location of the responder station by using the positioning method in this application is described below by using an example in which the initiator station has a known location and the responder station has an unknown location.

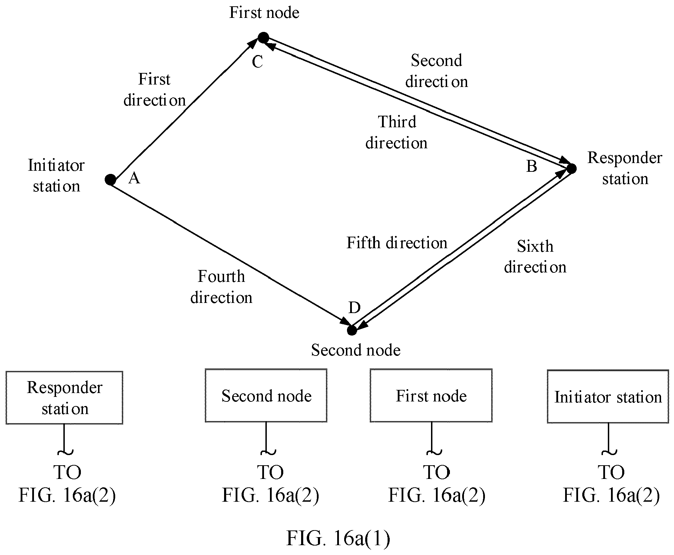

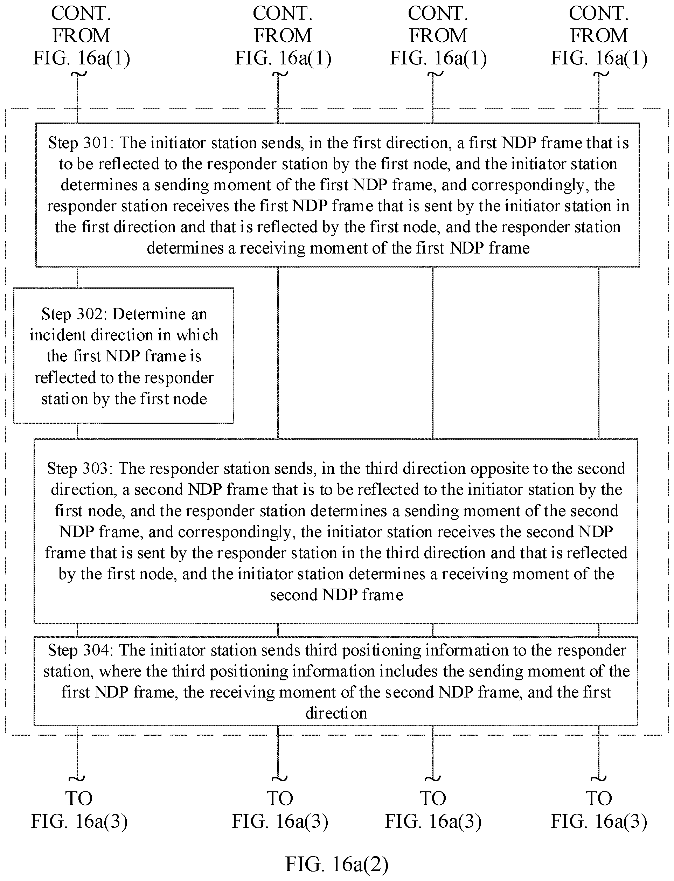

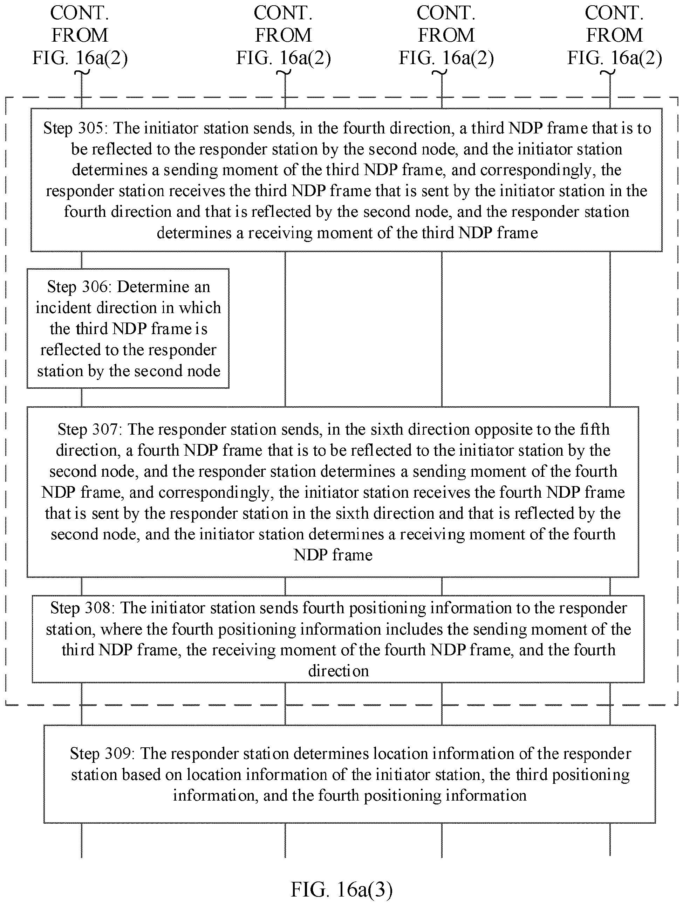

FIG. 16a(1), FIG. 16a(2), and FIG. 16a(3) show still another positioning method according to an implementation of this application. In the method, an example in which a responder station determines location information of the responder station is used for illustration. The method may be applied to but is not limited to being applied to the network architecture shown in FIG. 1. Referring to FIG. 16a(1), FIG. 16a(2), and FIG. 16a(3), the method may include the following processing procedure.

A same method is performed in step 301 to step 303 and step 201 to step 203. For a procedure of performing step 301 to step 303, refer to the description in step 201 to step 203. Details are not described herein.

Step 304: The initiator station sends third positioning information to the responder station, where the third positioning information includes the sending moment of the first NDP frame, the receiving moment of the second NDP frame, and the first direction.

A same method is performed in step 305 to step 307 and step 205 to step 207. For a procedure of performing step 301 to step 303, refer to the description in step 201 to step 203. Details are not described herein.

Step 308: The initiator station sends fourth positioning information to the responder station, where the fourth positioning information includes the sending moment of the third NDP frame, the receiving moment of the fourth NDP frame, and the fourth direction.

Step 309: The responder station determines the location information of the responder station based on location information of the initiator station, the third positioning information, and the fourth positioning information. The location information of the initiator station in step 309 may be obtained by the responder station from the initiator station in advance and locally stored, or may be obtained by the responder station from the initiator station in real time. This is not limited in this application.

In this application, for how the responder station determines the location information of the responder station based on the location information of the initiator station, the third positioning information, and the fourth positioning information, refer to the foregoing method for determining the location information of the initiator station based on the location information of the responder station, the first positioning information, and the second positioning information. Details are not described herein.

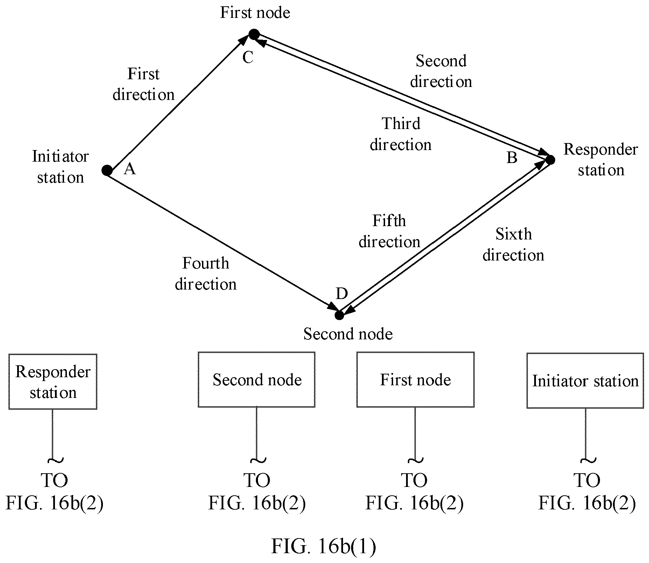

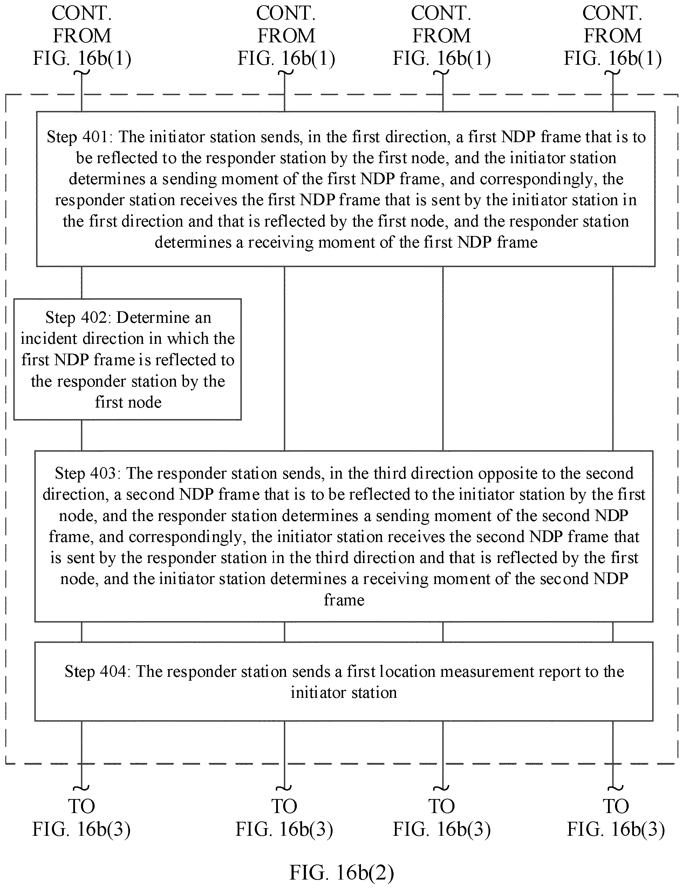

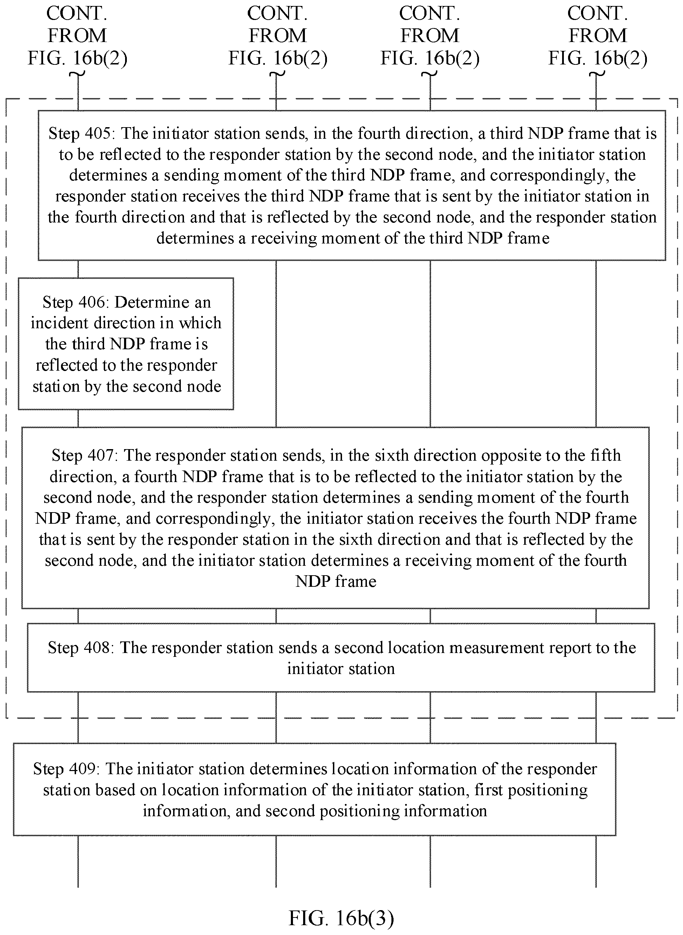

FIG. 16b(1), FIG. 16b(2), and FIG. 16b(3) show still another positioning method according to an implementation of this application. In the method, an example in which an initiator station determines location information of a responder station is used for illustration. The method may be applied to but is not limited to being applied to the network architecture shown in FIG. 1. Referring to FIG. 16b(1), FIG. 16b(2), and FIG. 16b(3), the method may include the following processing procedure.

A same method is performed in step 401 to step 408 and step 201 to step 208. For a procedure of performing step 401 to step 408, refer to the description in step 201 to step 208. Details are not described herein.

Step 409: The initiator station determines the location information of the responder station based on location information of the initiator station, first positioning information, and second positioning information. In this application, for how the initiator station determines the location information of the responder station based on the location information of the initiator station, the first positioning information, and the second positioning information, refer to the foregoing method for determining the location information of the initiator station based on the location information of the responder station, the first positioning information, and the second positioning information. Details are not described herein.

In a possible example, if the responder station triggers the directional fine time measurement, before performing the directional fine time measurement, the initiator station may further receive a trigger frame from the responder station. The trigger frame includes a type indication. The type indication is used to indicate that a type of the trigger frame is a directional ranging type, and the trigger frame of the directional ranging type is used to trigger the initiator station to perform directional fine time measurement. Alternatively, the type indication is used to indicate that a type of the trigger frame is a directional ranging measurement type, and the trigger frame of the directional ranging measurement type is used to trigger the initiator station to perform directional fine time measurement.

In another possible example, if the initiator station triggers the directional fine time measurement, before performing the directional fine time measurement, the initiator station may further send an NDP announcement frame to the responder station. The NDP announcement frame includes a directional indication. The directional indication is used to indicate a node (the initiator station and the responder station in this application) that is to participate in fine time measurement to perform directional fine time measurement. Alternatively, the directional indication is used to indicate a node that is to participate in fine time measurement to send a directional NDP frame to implement fine time measurement. Alternatively, the directional indication is used to indicate that an NDP frame sent after the NDPA frame is a directional frame.

In this implementation of this application, before performing directional fine time measurement, the initiator station and the responder station may further exchange capability information about whether the initiator station and the responder station support directional fine time measurement and information about whether the current fine time measurement is directional fine time measurement. For example, the initiator station may send a request frame to the responder station. The request frame includes first information and second information. The first information is used to indicate that the current negotiation is used to perform directional fine time measurement. The second information is used to indicate that the initiator station supports directional fine time measurement. The initiator station receives a response frame in response to the request frame from the responder station. The response frame includes the first information and third information. The third information is used to indicate that the responder station supports directional fine time measurement. It should be noted that in this application, an example in which the initiator station actively initiates exchange of the capability information is used for illustration. Certainly, the responder station may actively initiate exchange of the capability information. This is not limited.

In this application, in consideration of the fact that some responder stations have limited computing capabilities, and may fail to feed back a location measurement report to the initiator station in a timely manner in a process of performing directional fine time measurement, a delay measurement mechanism is provided. In this mechanism, the responder station sends a delay indication to the initiator station. The delay indication is used to indicate delay duration of feeding back a location measurement report by the responder station. Optionally, when sending the response frame, the responder station may include the delay indication in the response frame. In a possible example, when a value of the delay indication is 0, the delay indication is used to indicate that the delay duration is 0, and when the value of the delay indication is a non-zero value, the delay indication is used to indicate a length of the delay duration. A unit of the delay duration is not limited in this application, and may be adaptively determined based on an application scenario. Optionally, the delay duration may be in a unit of 100 milliseconds or in another unit.

In a possible implementation, the initiator station triggers a first directional fine time measurement, the responder station has a limited computing capability, and cannot feed back a location measurement report to the initiator station in a timely manner, and before performing the first directional fine time measurement, the responder station sends the delay indication to the initiator station by using the response frame, so that the initiator station initiates a second directional fine time measurement after a delay time indicated by the delay indication. In this way, the responder station has enough time to determine a location measurement report for the first directional fine time measurement, and then the responder station may send the location measurement report determined for the first directional fine time measurement to the initiator station in a process of the second directional fine time measurement. It should be noted that directions of the first directional precise time measurement and the second directional fine time measurement are the same. Based on this implementation, optionally, before the initiator station performs the second directional fine time measurement, the NDP announcement frame sent to the responder station may include a new and old direction indication. The new and old direction indication is used to indicate that a sending direction of an NDP frame sent after the NDP announcement frame is the same as a sending direction of an NDP frame sent after a previous NDP announcement frame. It may be understood that in this application, the new and old direction indication is merely used as a name of an indication, and the name is not limited. For example, the new and old direction indication may be described as a direction indication or a direction consistency indication.

In this implementation of this application, the directional fine time measurement method may be implemented based on an existing FTM procedure. When the directional fine time measurement method is implemented based on the existing FTM procedure, to facilitate distinction from existing FTM, directional fine time measurement implemented based on the existing FTM procedure may be described as directional FTM. Directional fine time measurement implemented based on FTM in an existing TB mode is described as directional FTM in the TB mode, and directional fine time measurement implemented based on FTM in an existing non-TB mode is described as directional FTM in the non-TB mode. The following describes the directional FTM by using four specific examples. In the following implementations of this application, description is provided by using an example in which a direction from an ISTA to an RSTA is an uplink direction, and a direction from the RSTA to the ISTA is a downlink direction. Correspondingly, an NDP frame sent by the ISTA to the RSTA may be described as a UL NDP frame, and an NDP frame sent by the RSTA to the ISTA may be described as a DL NDP frame.

**Example 1**

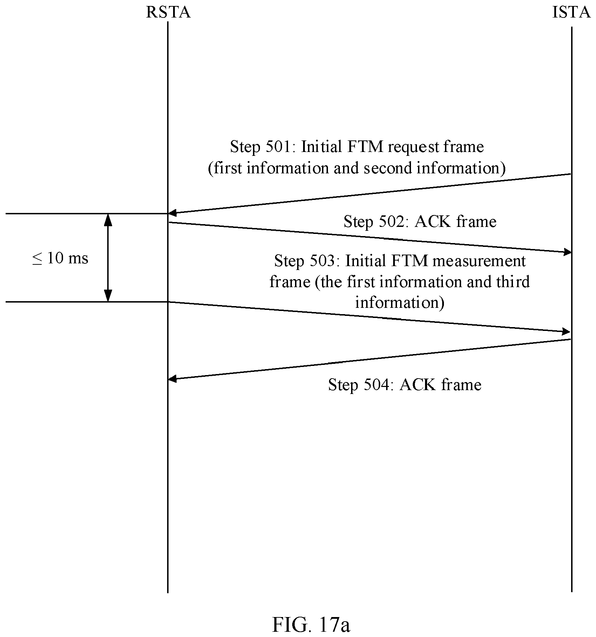

FIG. 17a to FIG. 17c are schematic diagrams of a procedure of directional FTM in a TB mode that is implemented based on FTM in the existing TB mode. In this application, the directional FTM in the TB mode that is implemented based on the FTM in the existing TB mode still uses procedures of the FTM in the existing TB mode. The procedures include a negotiation procedure, a measurement procedure, and a result feedback procedure. For details, refer to FIG. 2. In FIG. 17a to FIG. 17c, an example in which an initiator station is an ISTA (referred to as an ISTA below) with an antenna array, and a responder station is an RSTA (referred to as an RSTA below) with an antenna array is used for illustration.

A negotiation procedure of the directional FTM in the TB mode in this application is described by using an example in which the negotiation procedure of the directional FTM in the TB mode is the negotiation procedure of the existing FTM. For details of the negotiation procedure of the existing FTM, refer to the description in FIG. 3. FIG. 17a shows the negotiation procedure of the directional FTM in the TB mode in this application. The following steps are included.

Step 501: When there is a directional FTM measurement requirement, the ISTA sends an initial FTM request (initial FTM request) frame to the RSTA, where the initial FTM request frame includes first information and second information, the first information is used to indicate that the current negotiation is used to perform directional FTM, and the second information is used to indicate that the ISTA supports directional FTM.

Optionally, the first information and the second information may be carried in reserved bits of the initial FTM request frame. A structure of the initial FTM request frame is shown in FIG. 4, and B22, B23, B38, B39, B46, and B47 are reserved bits of the initial FTM request frame. For example, the first information and the second information may be carried in any two of the bits B22, B23, B38, B39, B46, and B47 of the initial FTM request frame. Optionally, the first information may also be referred to as a directional FTM request indication, and the second information may be referred to as a directional FTM support indication.

Optionally, the first information and the second information may be carried in a new message. This is not limited in this application.

Step 502: If the RSTA can perform directional FTM, the RSTA may reply to the ISTA with an ACK frame after an SIFS passes.

Step 503: If the RSTA can perform directional FTM, after receiving the initial FTM request frame, the RSTA sends an initial FTM measurement frame to the ISTA in response to the initial FTM request frame, where the initial FTM measurement frame includes the first information and third information, and the third information is used to indicate that the RSTA supports directional FTM. Optionally, after receiving the initial FTM request frame for 10 milliseconds, the RSTA sends the initial FTM measurement frame to the ISTA in response to the initial FTM request frame. Optionally, the third information may also be referred to as a directional FTM support indication.

Optionally, the first information and the third information may be carried in reserved bits of the initial FTM measurement frame. A structure of the initial FTM measurement frame is shown in FIG. 4, and B22, B23, B38, B39, B46, and B47 are reserved bits of the initial FTM measurement frame. For example, the first information and the third information may be carried in any two of the bits B22, B23, B38, B39, B46, and B47 of the initial FTM measurement frame.

Optionally, the first information and the third information may be carried in a new message. This is not limited in this application.

Step 504: After receiving the initial FTM measurement frame, the ISTA may reply to the RSTA with an ACK frame after the SIFS passes. Therefore, the negotiation procedure is completed.

It should be noted that an example in which the negotiation procedure of the directional FTM is the negotiation procedure of the existing FTM is used above for illustration. Certainly, the negotiation procedure of the FTM may be redefined in this application. A redefined negotiation procedure of the FTM may be actively initiated by the RSTA. A device that actively initiates the negotiation procedure is not limited in this application.

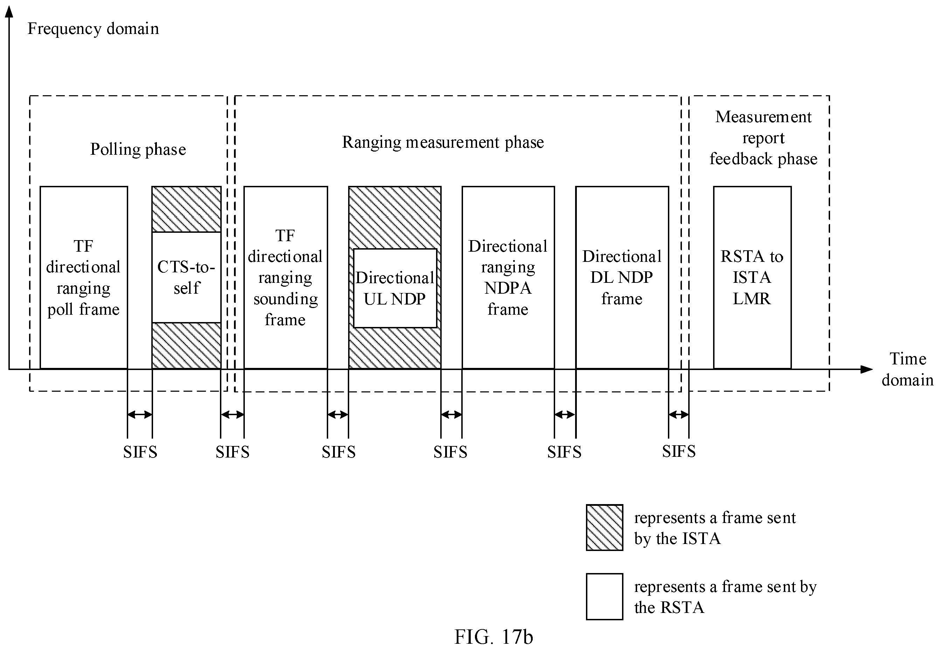

A measurement procedure and a result feedback procedure of the directional FTM in the TB mode in this application are described by using an example in which the measurement procedure and the result feedback procedure of the directional FTM in the TB mode are the measurement procedure and the result feedback procedure of the FTM in the existing TB mode. For details of the measurement procedure and the result feedback procedure of the FTM in the existing TB mode, refer to related description in FIG. 6 and FIG. 7. FIG. 17b shows the measurement procedure and the result feedback procedure of the directional FTM in the TB mode in this application. Optionally, the ISTA is a station, the RSTA is an access point, an NDP frame sent by the ISTA is referred to as an uplink NDP (UL NDP) frame, and an NDP frame sent by the RSTA is referred to as a downlink NDP (DL NDP) frame. The following steps are included.

A polling phase includes the following steps:

Step 1: The RSTA sends a TF directional ranging poll (TF directional ranging poll) frame to the ISTA in an idle time window of the RSTA, to notify the ISTA that measurement can be started.

Step 2: After receiving the TF directional ranging poll frame sent by the RSTA, the ISTA sends a clear to send (clear to send, CTS)-to-self (CTS-to-self) frame to the RSTA to occupy a channel.

A ranging measurement phase includes the following steps.

Step 1: The RSTA receives the CTS-to-self frame, and sends a TF directional ranging sounding (TF directional ranging sounding) frame to the ISTA after the SIFS passes, where the TF directional ranging sounding frame carries a type indication, the type indication is used to indicate that a type of the TF directional ranging sounding frame is a directional ranging type or a directional ranging (directional ranging) measurement type, and the TF directional ranging sounding frame is used to trigger the ISTA to perform directional FTM measurement.

Optionally, the type indication may be carried in a trigger type (trigger type) field in the TF directional ranging sounding frame. For a structure of the TF directional ranging sounding frame, refer to FIG. 8a to FIG. 8c. For example, the type indication may be a reserved value of the trigger type. As shown in Table 2, reserved values of the trigger type include 9 to 15. The type indication may be any value in the reserved values 9 to 15 of the trigger type, to indicate that the type of the TF directional ranging sounding frame is the directional ranging type or the directional ranging measurement type. Referring to Table 3, an example in which the type indication is the reserved value 9 of the trigger type is used for illustration.

**Table 3**

| Trigger type subfield value (trigger type subfield value) | Trigger frame variant (trigger frame variant) |
| --- | --- |
| 0 | Basic (basic) |
| 1 | Beamforming report poll (beamforming report poll (BFRP)) |
| 2 | MU-BAR |
| 3 | MU-RTS |
| 4 | Buffer status report poll (buffer status report poll (BSRP)) |
| 5 | GCR MU-BAR |
| 6 | Bandwidth query report poll (bandwidth query report poll (BQRP)) |
| 7 | NDP feedback report poll (NDP feedback report poll (NFRP)) |
| 8 | Ranging (ranging) |
| 9 | Directional ranging (directional ranging) |
| 10-15 | Reserved (reserved) |

Optionally, the type indication may be carried in a new message. This is not limited in this application.

Step 2: After receiving the directional ranging sounding frame for the SIFS, the ISTA sends a directional UL NDP frame in a first direction, where the directional UL NDP frame is reflected to the RSTA by a first node, the RSTA receives the directional UL NDP frame, the ISTA records a sending moment of the directional UL NDP frame, the RSTA records a receiving moment of the directional UL NDP frame, and the RSTA determines an incident direction in which the directional UL NDP frame is reflected to the RSTA by the first node. The direction is the foregoing second direction, and this may be understood as determining an AoA corresponding to the direction.

Step 3: After receiving the directional UL NDP frame for the SIFS, the RSTA sends a directional ranging NDPA (directional ranging NDPA) frame to the ISTA, to indicate the ISTA to continue directional ranging.

Step 4: After sending the directional ranging NDPA frame to the ISTA for the SIFS, the RSTA sends a directional DL NDP frame to the first node in a direction opposite to the second direction, where the directional DL NDP frame is reflected to the ISTA by the first node, the RSTA records a sending moment of the directional DL NDP frame, and after receiving the directional DL NDP frame, the ISTA records a receiving moment of the directional DL NDP frame. Therefore, the measurement process of the directional FTM is completed.

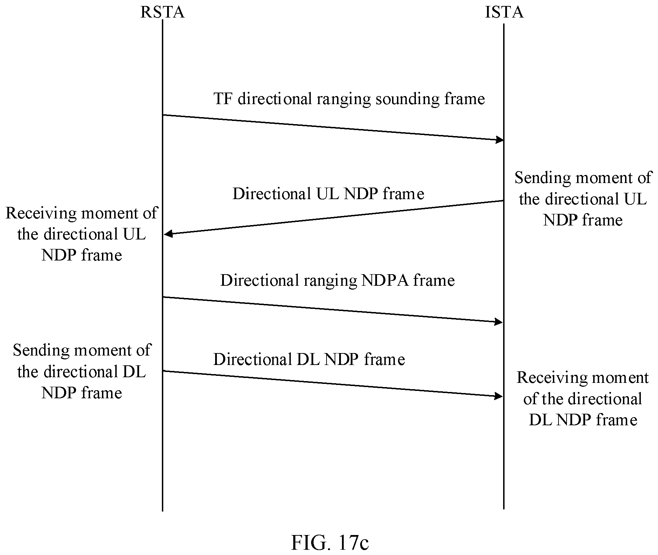

For details of the ranging measurement procedure, refer to FIG. 17c.

A measurement report feedback phase includes the following step:

Step 1: After the RSTA sends the directional DL NDP frame to the ISTA for the SIFS, the RSTA sends an LMR to the ISTA, where the LMR includes the receiving moment of the directional UL NDP frame, the sending moment of the directional DL NDP frame, and the second direction or the AoA corresponding to the second direction.

The foregoing is a complete directional FTM. To implement positioning by using the positioning method in this application, at least two directional FTMs in different directions need to be performed. It should be noted that when a next directional FTM measurement is performed, a negotiation procedure may not be performed, but instead measurement and result feedback procedures of the FTM are directly performed. By performing a plurality of directional FTMs in different directions, the ISTA may obtain a plurality of LMRs, and then may determine location information of the ISTA based on the plurality of LMRs and location information of the RSTA. Further, after the location information of the ISTA is determined, location information of the first node may be further determined based on the location information of the ISTA, the location information of the RSTA, an AoD corresponding to the first direction, and the AoA corresponding to the second direction. For a specific determining method, refer to the foregoing description. Details are not described herein.

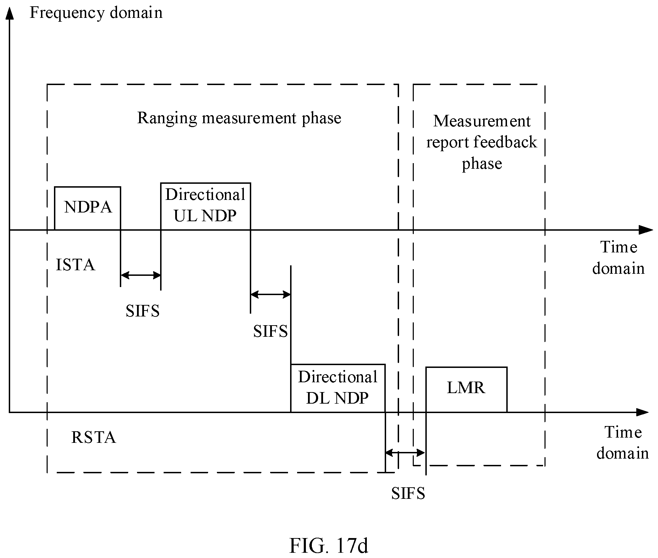

FIG. 17d is a schematic diagram of a measurement procedure and a result feedback procedure of directional FTM in a non-TB mode that is implemented based on a measurement procedure and a result feedback procedure of FTM in the existing non-TB mode. A negotiation procedure of the directional FTM in the non-TB mode is similar to that in FIG. 17a. Details are not described. In FIG. 17d, an example in which an initiator station is an ISTA (referred to as an ISTA below) with an antenna array, and a responder station is an RSTA (referred to as an RSTA below) with an antenna array is used for illustration.

Description is provided by using an example in which the measurement procedure and the result feedback procedure of the directional FTM in the non-TB mode are the measurement procedure and the result feedback procedure of the directional FTM in the existing non-TB mode. For details of the measurement procedure and the result feedback procedure of the directional FTM in the existing non-TB mode, refer to the description in FIG. 10. FIG. 17d shows the measurement procedure and the result feedback procedure of the directional FTM in the non-TB mode in this application. The following steps are included.

A ranging measurement phase includes the following steps.

Step 1: The ISTA sends an NDPA frame to the RSTA, to indicate the RSTA to start directional FTM measurement, where the NDPA frame includes a directional indication, and the directional indication is used to indicate a node that is to participate in directional ranging to perform directional FTM measurement or indicate that an NDP frame sent after the NDPA frame is directional.

Optionally, the directional indication may be carried in a reserved bit of a station information (STA info) field in a structure of the NDPA frame. For a structure of the station information (STA info) field, refer to FIG. 12b. For example, the directional indication may be a bit B26 or a bit B31 in the STA info field. In a possible implementation, when a value of the directional indication is 1, the directional indication is used to indicate the node that is to participate in directional ranging to perform directional FTM measurement or indicate that the NDP frame sent after the NDPA frame is directional. In another possible implementation, when a value of the directional indication is 0, the directional indication is used to indicate the node that is to participate in measurement to perform existing FTM measurement or indicate that the NDP frame sent after the NDPA frame is omnidirectional.

Optionally, the directional indication may be carried in a new message. This is not limited in this application.

Step 2: After sending the NDPA frame to the RSTA for an SIFS, the ISTA may send a directional UL NDP frame in a first direction to a sensed first node, where the directional UL NDP frame is reflected to the RSTA by the first node, and the ISTA may record a sending moment of the directional UL NDP frame.

Step 3: After receiving the directional UL NDP frame sent by the ISTA, the RSTA may record a receiving moment of the directional UL NDP frame, determine an incident direction in which the directional UL NDP frame is reflected to the RSTA by the first node, where the direction is the foregoing second direction, and this may be understood as determining an AoA corresponding to the direction, and send a directional DL NDP frame to the first node in a direction opposite to the second direction after the SIFS passes, where the directional DL NDP frame is reflected to the ISTA by the first node, the RSTA records a sending moment of the directional DL NDP frame, and after receiving the directional DL NDP frame, the ISTA records a receiving moment of the directional DL NDP frame. Therefore, the measurement process of the directional FTM is completed.

A measurement report feedback phase includes the following step:

Step 1: After the RSTA sends the directional DL NDP frame to the ISTA for the SIFS, the RSTA sends an LMR to the ISTA, where the LMR includes the receiving moment of the directional UL NDP frame, the sending moment of the directional DL NDP frame, and the second direction or the AoA corresponding to the second direction.

The foregoing is a complete directional FTM. To implement positioning by using the positioning method in this application, at least two directional FTMs in different directions need to be performed. It should be noted that when a next directional FTM measurement is performed, a negotiation procedure may not be performed, but instead measurement and result feedback procedures of the FTM are directly performed. By performing a plurality of directional FTMs in different directions, the ISTA may obtain a plurality of LMRs, and then may determine location information of the ISTA based on the plurality of LMRs and location information of the RSTA. Further, after the location information of the ISTA is determined, location information of the first node may be further determined based on the location information of the ISTA, the location information of the RSTA, an AoD corresponding to the first direction, and the AoA corresponding to the second direction. For a specific determining method, refer to the foregoing description. Details are not described herein.

**Example 2**

In Example 1, description is provided by using an example in which one RSTA interacts with one ISTA to implement directional FTM. In this example, description is provided by using an example in which one RSTA and a plurality of ISTAs implement directional FTM in a TB mode. A negotiation procedure of the directional FTM in this example is the same as that in Example 1, except that in this example, the RSTA responds to directional ranging requests of the plurality of ISTAs in the negotiation procedure. The following mainly describes measurement and result feedback procedures of the directional FTM between the one RSTA and the plurality of ISTAs in the TB mode.

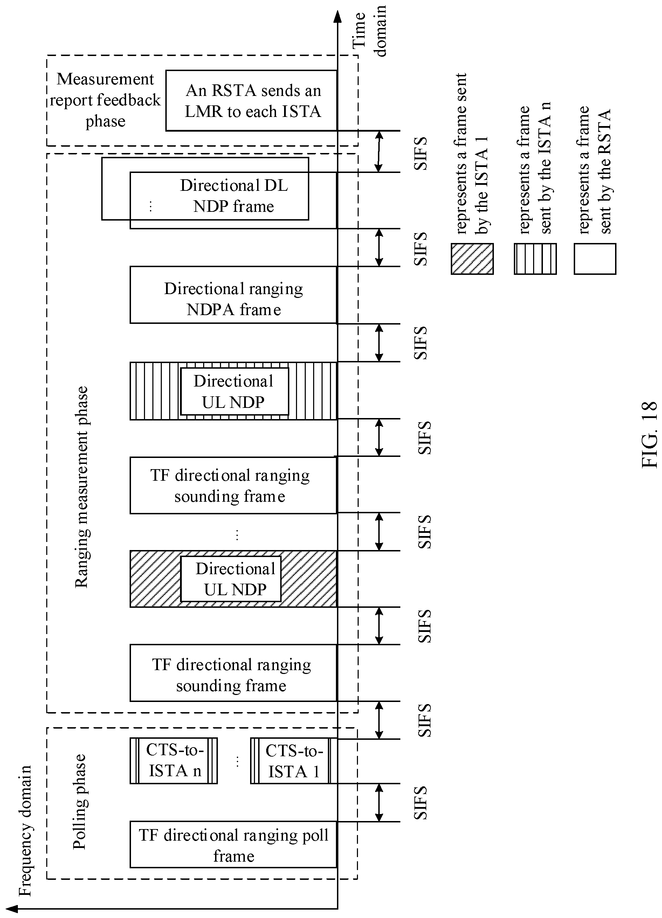

FIG. 18 is a schematic diagram of the measurement and result feedback procedures of the directional FTM between the one RSTA and the plurality of ISTAs in the TB mode. As shown in FIG. 18, the plurality of ISTAs are respectively an ISTA 1, an ISTA 2, ..., and an ISTA n, where n is an integer greater than or equal to 2.

A polling phase includes the following steps:

Step 1: The RSTA sends a TF directional ranging poll (TF directional ranging poll) frame to the plurality of ISTAs, namely, the ISTA 1 to the ISTA n, in an idle time window of the RSTA, to trigger the plurality of ISTAs to participate in directional FTM measurement. Optionally, the RSTA may simultaneously trigger, in a broadcast manner, the plurality of ISTAs to participate in directional FTM measurement.

Step 2: After receiving the TF directional ranging poll frame sent by the RSTA, each of the plurality of ISTAs sends a clear to send (clear to send, CTS)-to-self (CTS-to-self) frame to the RSTA to occupy a channel. For example, the ISTA 1 may send a CTS-to-ISTA 1 frame to the RSTA, the ISTA 2 may send a CTS-to-ISTA 2 frame to the RSTA, ..., and the ISTA n may send a CTS-to-ISTA n frame to the RSTA. By analogy, each of the plurality of ISTAs sends the CTS-to-self frame to the RSTA.

A ranging measurement phase includes the following steps.

Step 1: After receiving the CTS-to-self frame sent by each ISTA, the RSTA sequentially sends a TF directional ranging sounding frame to the plurality of ISTAs, where the TF directional ranging sounding frame carries a type indication. For related description of the type indication, refer to Example 1.

Step 2: After receiving the directional ranging sounding frame for an SIFS, all the ISTAs sequentially send a directional UL NDP frame in a specific direction to a sensed third-party passive node, where each directional UL NDP frame is reflected to the RSTA by the third-party passive node, the RSTA receives the directional UL NDP frame sent by each ISTA, each ISTA records a sending moment of the directional UL NDP frame, the RSTA records a receiving moment of the directional UL NDP frame sent by each ISTA, and the RSTA determines an incident direction in which the directional UL NDP frame corresponding to each ISTA is reflected to the RSTA by the third-party passive node or an AoA for the ISTA.

In Example 2, all the ISTAs sequentially send the directional UL NDP frame, and therefore the RSTA may have more time to determine the incident direction, and for an ISTA that sends the directional UL NDP frame at an earlier time, the RSTA has more time to determine the incident direction for the ISTA.

Step 3: After receiving the last directional UL NDP frame for the SIFS, the RSTA sends a directional ranging NDPA (directional ranging NDPA) frame to the plurality of ISTAs, to allocate resources to the plurality of ISTAs. Optionally, the resource may be a frequency domain resource or a time-frequency resource. Optionally, the RSTA may send the directional ranging NDPA frame to the plurality of ISTAs in a broadcast manner.

Step 4: After sending the directional ranging NDPA frame to the plurality of ISTAs for the SIFS, the RSTA sends a directional DL NDP frame to the third-party passive node in a direction opposite to the incident direction determined for each ISTA for the ISTA, where the directional DL NDP frame is reflected to the ISTA by the third-party passive node, the RSTA records a sending moment of each directional DL NDP frame, and each ISTA records a receiving moment of the directional DL NDP frame after receiving the directional DL NDP frame.

A measurement report feedback phase includes the following step:

Step 1: After the RSTA sends the directional DL NDP frame to the plurality of ISTAs for the SIFS, the RSTA sends an LMR to the plurality of ISTAs, where the LMR includes at least the incident direction that is of the directional UL NDP frame and that is determined for each of the ISTA 1 to the ISTA n, the receiving moment of the directional UL NDP frame for each ISTA, and the sending moment of the directional DL NDP frame for each ISTA. In the method, the RSTA may send a measurement result to the plurality of ISTAs by using one LMR, thereby improving air interface efficiency.

For a process of performing directional FTM measurement for each ISTA in Example 2, refer to Example 1. For a method for determining location information of each ISTA, refer to the foregoing description. Details are not described herein.

**Example 3**

In this example, description is provided by still using an example in which one RSTA and a plurality of ISTAs implement directional FTM in a TB mode. A negotiation procedure of the directional FTM in this example is the same as that in Example 1, except that in this example, the RSTA responds to directional ranging requests of the plurality of ISTAs in the negotiation procedure. The following mainly describes measurement and result feedback procedures of the directional FTM between the one RSTA and the plurality of ISTAs in the TB mode.

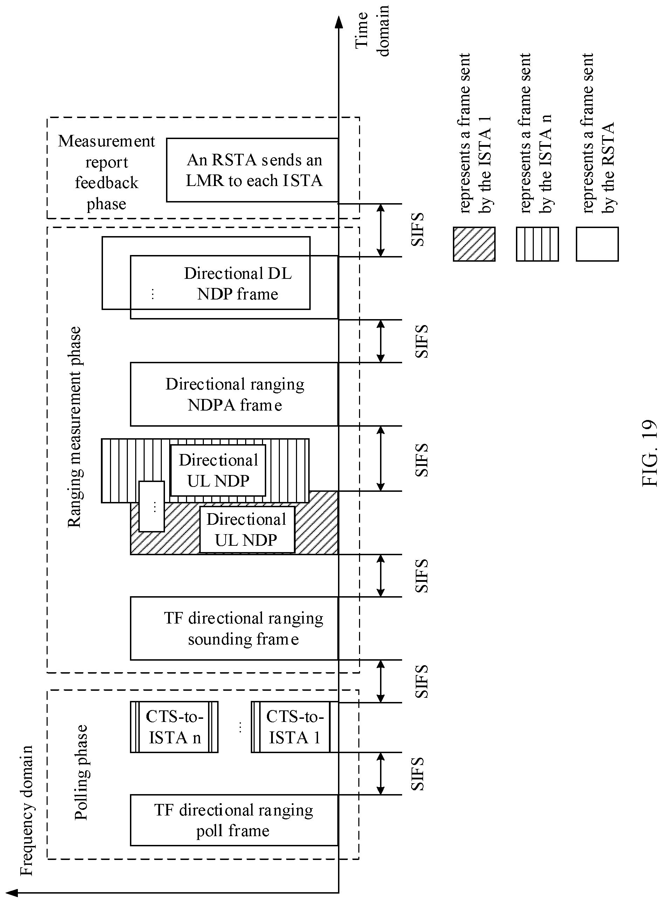

FIG. 19 is another schematic diagram of the measurement and result feedback procedures of the directional FTM between the one RSTA and the plurality of ISTAs in the TB mode. A difference between this example and Example 2 lies in that in Example 2, the RSTA sequentially triggers the plurality of ISTAs to send the directional NDP frame, and in this example, the RSTA triggers the plurality of ISTAs to simultaneously send the directional NDP frame. As shown in FIG. 19, the plurality of ISTAs are respectively an ISTA 1, an ISTA 2, ..., and an ISTA n, where n is an integer greater than or equal to 2.

A polling phase in Example 3 is the same as that in Example 2. For details, refer to the description in Example 2.

A ranging measurement phase includes the following steps.

Step 1: After receiving the CTS-to-self frame sent by each ISTA, the RSTA simultaneously sends a TF directional ranging sounding frame to the plurality of ISTAs, to allocate a resource to each ISTA and trigger the plurality of ISTAs to simultaneously send a directional UL NDP frame, where the TF directional ranging sounding frame carries a type indication. For related description of the type indication, refer to Example 1.

Step 2: After receiving the directional ranging sounding frame for an SIFS, the plurality of ISTAs simultaneously send a directional UL NDP frame in a specific direction to a sensed third-party passive node, where each directional UL NDP frame is reflected to the RSTA by the third-party passive node, the RSTA receives the directional UL NDP frame sent by each ISTA, each ISTA records a sending moment of the directional UL NDP frame, the RSTA records a receiving moment of the directional UL NDP frame sent by each ISTA, and the RSTA determines an incident direction in which the directional UL NDP frame corresponding to each ISTA is reflected to the RSTA by the third-party passive node or an AoA for the ISTA.

Step 3: After receiving each directional UL NDP frame for the SIFS, the RSTA sends a directional ranging NDPA (directional ranging NDPA) frame to the plurality of ISTAs, to allocate resources to the plurality of ISTAs. Optionally, the RSTA may send the directional ranging NDPA frame to the plurality of ISTAs in a broadcast manner.

Step 4: After sending the directional ranging NDPA frame to the plurality of ISTAs for the SIFS, the RSTA sends a directional DL NDP frame to the third-party passive node in a direction opposite to the incident direction determined for each ISTA for the ISTA, where the directional DL NDP frame is reflected to the ISTA by the third-party passive node, the RSTA records a sending moment of each directional DL NDP frame, and each ISTA records a receiving moment of the directional DL NDP frame after receiving the directional DL NDP frame.

A measurement report feedback phase is the same as that in Example 2. The RSTA combines LMRs determined for all the ISTAs, and sends a combined LMR. The combined LMR includes at least the incident direction that is of the directional UL NDP frame and that is determined for each of the ISTA 1 to the ISTA n, the receiving moment of the directional UL NDP frame for each ISTA, and the sending moment of the directional DL NDP frame for each ISTA. In this way, air interface efficiency can be improved.

For a process of performing directional FTM measurement for each ISTA in Example 3, refer to Example 1. For a method for determining location information of each ISTA, refer to the foregoing description. Details are not described herein.

**Example 4**

When the directional FTM measurement method in this application is performed in a non-TB mode, there may be some RSTAs with limited computing capabilities, and these RSTAs cannot feed back a location measurement report to an ISTA in a timely manner. Based on this, a method in Example 4 of this application is provided. Example 4 provides a solution for delaying directional FTM measurement. In Example 4, description is provided by using an example in which one RSTA interacts with one ISTA to implement directional FTM. The following mainly describes a difference between this example and Example 1.

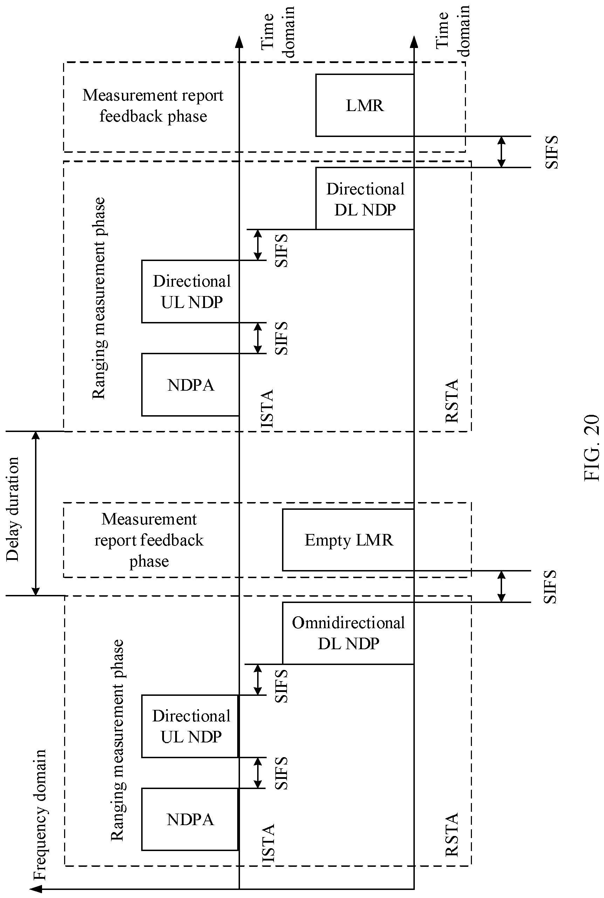

FIG. 20 is a schematic diagram of measurement and result feedback procedures of directional FTM measurement between an RSTA and an ISTA in the non-TB mode.

In a negotiation procedure, the RSTA may send a delay indication to the ISTA. The delay indication is used to indicate delay duration for feeding back a location measurement report by the RSTA. For example, when a value of the delay indication is 0, the delay indication is used to indicate that the delay duration is 0, and when the value of the delay indication is a non-zero value, the delay indication is used to indicate a length of the delay duration. Alternatively, the delay indication is used to indicate shortest duration required by the RSTA to determine an AoA. For example, when the value of the delay indication is 0, the delay indication is used to indicate that the shortest duration required by the RSTA to determine the AoA is less than an SIFS, and when the value of the delay indication is a non-zero value, the delay indication is used to indicate the shortest duration required by the RSTA to determine the AoA. Optionally, the delay indication may be carried in ranging subelements (ranging subelements) of an initial FTM measurement frame. For example, the delay indication may be one or more reserved bits of a ranging subelement (ranging subelement) field. Alternatively, the delay indication may be carried in a new message. In an example, four reserved bits in the non-TB ranging subelement field of the FTM measurement frame are used to indicate a time required to calculate the AoA, and are recorded as a minimum AoA ready (Min AoA ready) field. When a value of Min AoA ready is 0, it indicates that the RSTA has a capability of completing calculation of the AoA within the SIFS, and no delay feedback is required. When the value of Min AoA ready is another non-zero value, it indicates a length of a time required by the RSTA to calculate the AoA. The length is in a unit of 100 milliseconds or in another unit.

It may be understood that when the value of the delay indication is 0, it indicates that no delay is required. Example 4 is mainly for a case in which a delay is required. Therefore, in Example 4, description is provided by using an example in which the delay indication has a non-zero value.

Step 1: The ISTA sends an NDPA frame to the RSTA, to trigger the RSTA to start directional FTM measurement, where the NDPA frame includes a directional indication. For description of the directional indication, refer to Example 1.

Step 2: After sending the NDPA frame to the RSTA for the SIFS, the ISTA may send a directional UL NDP frame in a first direction to a sensed first node, where the directional UL NDP frame is reflected to the RSTA by the first node, and the ISTA may record a sending moment of the directional UL NDP frame.

Step 3: After receiving the directional UL NDP frame sent by the ISTA, the RSTA may record a receiving moment of the directional UL NDP frame, and start to determine an incident direction in which the directional UL NDP frame is reflected to the RSTA by the first node. The direction is the foregoing second direction, and this may be understood as determining an AoA corresponding to the direction. The RSTA sends the delay indication to the ISTA in the negotiation process, which indicates that the RSTA cannot complete calculation and preparation of information such as the AoA within the SIFS. Therefore, the RSTA determines that there needs to be a delay in feeding back an LMR.

Step 4: The RSTA cannot complete calculation of the AoA within the SIFS, and therefore the directional FTM measurement procedure in Example 1 cannot be normally performed. In this case, the RSTA may send an omnidirectional DL NDP (namely, a DL NDP in existing FTM) to the ISTA to buy time for the RSTA to determine the AoA.

Step 5: Further, the RSTA may further send an empty LMR to the ISTA after sending the omnidirectional DL NDP for the SIFS, to buy time for the RSTA to determine the AoA. It should be noted that this step is an optional execution step. If the RSTA can determine the AoA after performing step 4, this step does not need to be performed.

If step 5 is not performed, after step 4 is performed, the ISTA may initiate a new directional FTM measurement after the delay duration passes. A procedure of the new directional FTM measurement is the same as that in Example 1, except that in the new directional FTM measurement, an LMR fed back by the RSTA to the ISTA is determined and obtained based on information exchanged in a previous directional FTM measurement.

It should be noted that a direction of the new directional FTM measurement may be the same as or different from a direction of the previous directional FTM measurement. When the directions of the two measurements are the same, the ISTA may determine location information of the ISTA based on the LMR fed back in the new directional FTM measurement. When the directions of the two measurements are different, the RSTA may calculate an AoA for the current directional FTM measurement, so that the AoA can be used in a next directional FTM measurement procedure with a same direction as the current directional FTM measurement.

In this example, to help the RSTA make a corresponding decision, for example, whether the RSTA feeds back an AoA determined for the previous directional FTM measurement in the current directional FTM measurement procedure or it is determined that the AoA in the current directional FTM measurement procedure is to be used in the next directional FTM measurement procedure, the ISTA may notify, by using a new and old direction indication, the RSTA whether the direction of the currently initiated directional FTM measurement is the same as the direction of the previously initiated directional FTM measurement.

Optionally, the ISTA may include the new and old direction indication in each NDPA frame that is sent. The new and old direction indication is used to indicate whether a sending direction of an NDP frame sent after the NDPA frame is the same as a sending direction of an NDP frame sent after a previous NDPA frame. For example, the new and old direction indication may be carried in a reserved bit of a station information (STA info) field in a structure of the NDPA frame. For a structure of the station information (STA info) field, refer to FIG. 12b. For example, the new and old direction indication may be a bit B26 or a bit B31 in the STA info field. In a possible implementation, when a value of the new and old direction indication is 0, it indicates that the sending direction of the NDP frame sent after the NDPA frame is different from the sending direction of the NDP frame sent after the previous NDPA frame. When the value of the new and old direction indication is 1, it indicates that the sending direction of the NDP frame sent after the NDPA frame is the same as the sending direction of the NDP frame sent after the previous NDPA frame.

Optionally, the new and old direction indication may be carried in a new message. Whether the new and old direction indication is carried in a new message or an existing message is not limited in this application.

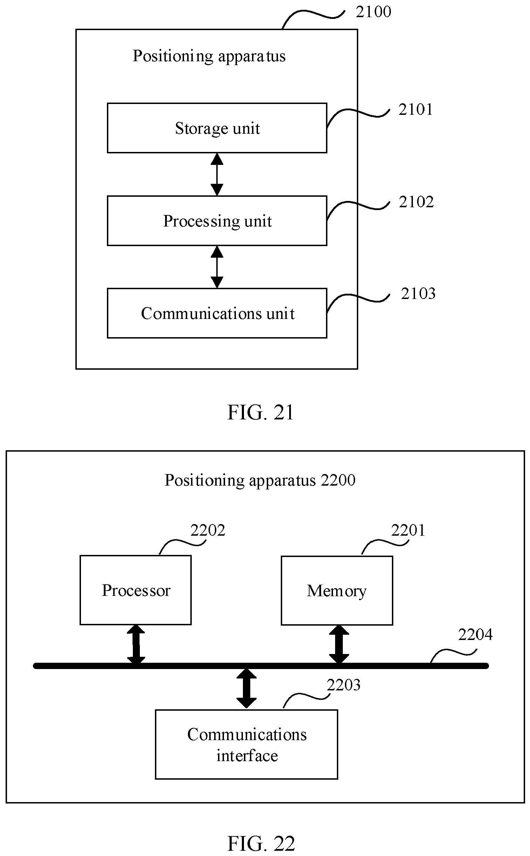

When an integrated unit is used, FIG. 21 is a possible example block diagram of an apparatus according to an implementation of this application. The apparatus 2100 may exist in a form of software, may be an initiator station or a responder station, or may be a chip in an initiator station or a chip in a responder station. If the apparatus 2100 is an initiator station, the apparatus 2100 may be configured to perform any method and function related to the initiator station in the foregoing implementations. If the apparatus 2100 is a responder station, the apparatus 2100 may be configured to perform any method and function related to the responder station in the foregoing implementations.

The apparatus 2100 includes a processing unit 2102 and a communications unit 2103. The communications unit 2103 may include a receiving unit and a sending unit. The processing unit 2102 is configured to control and manage an action of the apparatus 2100. The communications unit 2103 is configured to support the apparatus 2100 in communicating with another network entity (for example, a responder station). The apparatus 2100 may further include a storage unit 2101, configured to store program code and data of the apparatus 2100.

The processing unit 2102 may be a processor or a controller, for example, a CPU, a general-purpose processor, a DSP, an ASIC, an FPGA or another programmable logic device, a transistor logic device, a hardware component, or any combination thereof. The processing unit may implement or execute various example logical blocks, modules, and circuits described with reference to content disclosed in this application. The processor may be a combination of processors implementing a computing function, for example, a combination of one or more microprocessors, or a combination of the DSP and a microprocessor. The communications unit 2103 may be a communications interface, a transceiver, a transceiver circuit, or the like. The communications interface is a general name. During specific implementation, the communications interface may include a plurality of interfaces, for example, an interface between an initiator station and a responser station and/or another interface. The storage unit 2101 may be a memory.

In a possible implementation, the apparatus 2100 exists in a form of software, may be an initiator station, or may be a chip in an initiator station. Based on this implementation, the processing unit 2102 may support the apparatus 2100 in performing the action of the initiator station in the foregoing method examples, for example, support the apparatus 2100 in performing step 101 to step 103 in FIG. 13. The communications unit 2103 may support the apparatus 2100 in communicating with a responder station. For example, the communications unit 2103 may support the apparatus 2100 in performing any step of step 201, step 203, step 204, step 205, step 207, or step 208 in FIG. 15A, FIG. 15B, and FIG. 15C, any step of step 301, step 303, step 304, step 305, step 307, step 308, or step 309 in FIG. 16a(1), FIG. 16a(2), and FIG. 16a(3), and any step of step 401, step 403, step 404, step 405, step 407, step 408, or step 409 in FIG. 16b(1), FIG. 16b(2), and FIG. 16b(3).

Based on the foregoing possible implementation, in a possible design, the communications unit 2103 is further configured to receive a trigger frame from the responder station. The trigger frame includes a type indication, the type indication is used to indicate that a type of the trigger frame is a directional ranging type, and the trigger frame of the directional ranging type is used to trigger the initiator station to perform directional fine time measurement.

Based on the foregoing possible implementation, in a possible design, the communications unit 2103 is further configured to send an NDP announcement frame to the responder station. The NDP announcement frame includes a directional indication, and the directional indication is used to indicate a node that is to participate in fine time measurement to perform directional fine time measurement.

Based on the foregoing possible implementation, in a possible design, the communications unit 2103 is further configured to: send a request frame to the responder station, where the request frame includes first information and second information, the first information is used to indicate that the current negotiation is used to perform directional fine time measurement, and the second information is used to indicate that the initiator station supports directional fine time measurement; and receive a response frame in response to the request frame from the responder station, where the response frame includes the first information and third information, and the third information is used to indicate that the responder station supports directional fine time measurement.

In another possible implementation, the apparatus 2100 exists in a form of software, may be a responder station, or may be a chip in a responder station. Based on this implementation, the processing unit 2102 may support the apparatus 2100 in performing the action of the responder station in the foregoing method examples, for example, support the apparatus 2100 in performing step 202 or step 206 in FIG. 15A, FIG. 15B, and FIG. 15C, step 302 or step 306 in FIG. 16a(1), FIG. 16a(2), and FIG. 16a(3), and step 402 or step 406 in FIG. 16b(1), FIG. 16b(2), and FIG. 16b(3). The communications unit 2103 may support the apparatus 2100 in communicating with an initiator station. For example, the communications unit 2103 may support the apparatus 2100 in performing any step of step 201, step 203, step 204, step 205, step 207, or step 208 in FIG. 15A, FIG. 15B, and FIG. 15C, any step of step 301, step 303, step 304, step 305, step 307, step 308, or step 309 in FIG. 16a(1), FIG. 16a(2), and FIG. 16a(3), and any step of step 401, step 403, step 404, step 405, step 407, step 408, or step 409 in FIG. 16b(1), FIG. 16b(2), and FIG. 16b(3).

Based on the foregoing possible implementation, in a possible design, the communications unit 2103 is further configured to send a trigger frame to the initiator station. The trigger frame includes a type indication, the type indication is used to indicate that a type of the trigger frame is a directional ranging type, and the trigger frame of the directional ranging type is used to trigger the initiator station to perform directional fine time measurement.

Based on the foregoing possible implementation, in a possible design, the communications unit 2103 is further configured to receive an NDP announcement frame from the initiator station. The NDP announcement frame includes a directional indication, and the directional indication is used to indicate a node that is to participate in fine time measurement to perform directional fine time measurement.

Based on the foregoing possible implementation, in a possible design, the communications unit 2103 is further configured to: receive a request frame from the initiator station, where the request frame includes first information and second information, the first information is used to indicate that the current negotiation is used to perform directional fine time measurement, and the second information is used to indicate that the initiator station supports directional fine time measurement; and send a response frame in response to the request frame to the initiator station, where the response frame includes the first information and third information, and the third information is used to indicate that the responder station supports directional fine time measurement.

When the processing unit 2102 is a processor, the communications unit 2103 is a communications interface, and the storage unit 2101 is a memory, the apparatus 2100 according to the implementations of this application may be an apparatus 2200 shown in FIG. 22.

Referring to FIG. 22, the positioning apparatus 2200 includes one or more processors 2202, a communications interface 2203, and a memory 2201. Optionally, the positioning apparatus 2200 may further include a bus 2204. The communications interface 2203, the processor 2202, and the memory 2201 may be connected to each other by using the bus 2204. The bus 2204 may be a peripheral component interconnect (peripheral component interconnect, PCI for short) bus, an extended industry standard architecture (extended industry standard architecture, EISA for short) bus, or the like. The bus 2204 may be classified into an address bus, a data bus, a control bus, and the like. For ease of representation, only one thick line is used to represent the bus in FIG. 22, but this does not mean that there is only one bus or only one type of bus.

Based on a same concept as the foregoing method implementations, an implementation of this application further provides a computer-readable storage medium, storing some instructions. When these instructions are invoked and executed by a computer, the computer may be enabled to complete the method in any one of the foregoing method implementations or the possible designs of the foregoing method implementations. In this implementation of this application, the computer-readable storage medium is not limited. For example, the computer-readable storage medium may be a RAM (random access memory, random access memory) or a ROM (read-only memory, read-only memory).

Based on a same concept as the foregoing method implementations, this application further provides a computer program product. When being invoked and executed by a computer, the computer program product can complete the method in any one of the foregoing method implementations and the possible designs of the foregoing method implementations.

Based on a same concept as the foregoing method implementations, this application further provides a chip. The chip is coupled to a transceiver, and is configured to complete the method in any one of the foregoing method implementations and the possible implementations of the foregoing method implementations. "Coupling" means that two components are directly or indirectly combined with each other. The combination may be fixed or movable, and the combination may allow communication of a fluid, electricity, an electrical signal, or another type of signal between the two parts.

All or some of the foregoing implementations may be implemented by using software, hardware, firmware, or any combination thereof. When software is used to implement the implementations, all or some of the implementations may be implemented in a form of a computer program product. The computer program product includes one or more computer instructions. When the computer program instructions are loaded and executed on a computer, all or some of the procedures or the functions according to the implementations of the present disclosure are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The various illustrative logical units and circuits described in the implementations of this application may implement or operate the described functions through a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in the implementations of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to a processor, so that the processor can read information from the storage medium and write information to the storage medium. Optionally, the storage medium may alternatively be integrated into the processor. The processor and the storage medium may be arranged in the ASIC, and the ASIC may be arranged in a terminal device. Optionally, the processor and the storage medium may alternatively be arranged in different components of the terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the other programmable device provide steps for implementing a specified function in one or more processes in the flowcharts and/or in one or more blocks in the block diagrams.

The scope of protection shall be defined by the appended claims.

**Claims**

1. A positioning method, comprising:

obtaining (101, 201-204), by an initiator station, first positioning information, wherein the first positioning information comprises a sending moment of a first null data packet, NDP, frame corresponding to sending of the first NDP frame by the initiator station, a receiving moment of the first NDP frame corresponding to receiving of the first NDP frame by the responder station, a sending moment of a second NDP frame corresponding to sending of the second NDP frame by the responder station, a receiving moment of the second NDP frame corresponding to receiving of the second NDP frame by the initiator station, a first direction, and a second direction, the first NDP frame is a frame that is sent by the initiator station in the first direction and that is reflected to a responder station by a first node, the second direction is an incident direction in which the first NDP frame is reflected to the responder station by the first node, the second NDP frame is a frame that is sent by the responder station in a third direction and that is reflected to the initiator station by the first node, and the third direction is opposite to the second direction;

obtaining (102, 205-208), by the initiator station, second positioning information, wherein the second positioning information comprises a sending moment of a third NDP frame corresponding to sending of the third NDP frame by the initiator station, a receiving moment of the third NDP frame corresponding to receiving of the third NDP frame by the responder station, a sending moment of a fourth NDP frame corresponding to sending of the fourth NDP frame by the responder station, a receiving moment of the fourth NDP frame corresponding to receiving of the fourth NDP frame by the initiator station, a fourth direction, and a fifth direction, the third NDP frame is a frame that is sent by the initiator station in the fourth direction and that is reflected to the responder station by a second node, the fifth direction is an incident direction in which the third NDP frame is reflected to the responder station by the second node, the fourth NDP frame is a frame that is sent by the responder station in a sixth direction and that is reflected to the initiator station by the second node, and the sixth direction is opposite to the fifth direction; and

determining (103), by the initiator station, location information of the initiator station based on location information of the responder station, the first positioning information, and the second positioning information;

wherein the method further comprises:

determining, by the initiator station, location information of the first node based on the location information of the responder station, the location information of the initiator station, a first angle of departure, AoD, corresponding to the first direction, and a first angle of arrival, AoA, corresponding to the second direction; and/or

determining, by the initiator station, location information of the second node based on the location information of the responder station, the location information of the initiator station, a second AoD corresponding to the fourth direction, and a second AoA corresponding to the fifth direction;

wherein the first node and the second node are passive devices, or are active devices that work in a passive mode, such that the first node and the second node do not have a Wi-Fi communication capability.

2. The method according to claim 1, wherein the obtaining, by an initiator station, first positioning information comprises: performing, by the initiator station, directional fine time measurement to obtain the first positioning information, wherein the performing, by the initiator station, directional fine time measurement to obtain the first positioning information comprises:

sending, by the initiator station in the first direction, the first NDP frame that is to be reflected to the responder station by the first node, and determining the sending moment of the first NDP frame;
receiving, by the initiator station, the second NDP frame that is sent by the responder station in the third direction and that is reflected by the first node, and determining the receiving moment of the second NDP frame; and
receiving, by the initiator station, a first location measurement report from the responder station, wherein the first location measurement report comprises the receiving moment of the first NDP frame, the sending moment of the second NDP frame, and the second direction; and

the obtaining, by the initiator station, second positioning information comprises:
performing, by the initiator station, directional fine time measurement to obtain the second positioning information, wherein the performing, by the initiator station, directional fine time measurement to obtain the second positioning information comprises:

sending, by the initiator station in the fourth direction, the third NDP frame that is to be reflected to the responder station by the second node, and determining the sending moment of the third NDP frame;
receiving, by the initiator station, the fourth NDP frame that is sent by the responder station in the sixth direction and that is reflected by the second node, and determining the receiving moment of the fourth NDP frame; and
receiving, by the initiator station, a second location measurement report from the responder station, wherein the second location measurement report comprises the receiving moment of the third NDP frame, the sending moment of the fourth NDP frame, and the fifth direction.

3. The method according to claim 1 or 2, before the obtaining, by an initiator station, first positioning information, further comprising:
receiving, by the initiator station, a trigger frame from the responder station, wherein the trigger frame comprises a type indication, the type indication is configured to indicate that a type of the trigger frame is a directional ranging type, and the trigger frame of the directional ranging type is configured to trigger the initiator station to perform directional fine time measurement.

4. The method according to claim 1 or 2, before the obtaining, by an initiator station, first positioning information, further comprising:
sending, by the initiator station, an NDP announcement frame to the responder station, wherein the NDP announcement frame comprises a directional indication, and the directional indication is configured to indicate a node that is to participate in fine time measurement to perform directional fine time measurement.

5. The method according to any one of claims 1 to 4, before the obtaining, by an initiator station, first positioning information, further comprising:

sending, by the initiator station, a request frame to the responder station, wherein the request frame comprises first information and second information, the first information is configured to indicate that the current negotiation is used to perform directional fine time measurement, and the second information is configured to indicate that the initiator station supports directional fine time measurement; and
receiving, by the initiator station, a response frame in response to the request frame from the responder station, wherein the response frame comprises the first information and third information, and the third information is configured to indicate that the responder station supports directional fine time measurement.

6. The method according to any one of claims 1 to 5, wherein the determining, by the initiator station, location information of the initiator station based on location information of the responder station, the first positioning information, and the second positioning information comprises:

determining, by the initiator station, a first distance based on the sending moment of the first NDP frame, the receiving moment of the first NDP frame, the sending moment of the second NDP frame, and the receiving moment of the second NDP frame, wherein the first distance is a sum of a distance between the initiator station and the first node and a distance between the first node and the responder station;

determining, by the initiator station, a second distance based on the sending moment of the third NDP frame, the receiving moment of the third NDP frame, the sending moment of the fourth NDP frame, and the receiving moment of the fourth NDP frame, wherein the second distance is a sum of a distance between the initiator station and the second node and a distance between the second node and the responder station; and

determining, by the initiator station, the location information of the initiator station based on the location information of the responder station, the first distance, the second distance, the first direction, the second direction, the fourth direction, and the fifth direction.

7. The method according to claim 5, wherein the response frame further comprises a delay indication, and the delay indication is configured to indicate delay duration for feeding back a location measurement report by the responder station.

8. The method according to claim 7, wherein when a value of the delay indication is 0, the delay indication is configured to indicate that the delay duration is 0, and when the value of the delay indication is a non-zero value, the delay indication is configured to indicate a length of the delay duration.

9. The method according to claim 4, wherein the NDP announcement frame further comprises a new and old direction indication, and the new and old direction indication is configured to indicate that a sending direction of an NDP frame sent after the NDP announcement frame is the same as a sending direction of an NDP frame sent after a previous NDP announcement frame.

10. An apparatus comprising means configured to perform a method according to any one claims 1 to 9.

**Patentansprüche**

1. Positionierungsverfahren, umfassend:

Erlangen (101, 201-204)
erster Positionierungsinformationen durch eine Initiatorstation, wobei die ersten Positionierungsinformationen einen Sendezeitpunkt eines ersten Nulldatenpaketrahmens (NDP-Rahmens), der einem Senden des ersten NDP-Rahmens durch die Initiatorstation entspricht, einen Empfangszeitpunkt des ersten NDP-Rahmens, der einem Empfangen des ersten NDP-Rahmens durch die Antwortstation entspricht, einen Sendezeitpunkt eines zweiten NDP-Rahmens, der einem Senden des zweiten NDP-Rahmens durch die Antwortstation entspricht, einen Empfangszeitpunkt des zweiten NDP-Rahmens, der einem Empfangen des zweiten NDP-Rahmens durch die Initiatorstation entspricht, eine erste Richtung und eine zweite Richtung umfassen, wobei der erste NDP-Rahmen ein Rahmen ist, der durch die Initiatorstation in die erste Richtung gesendet wird und durch einen ersten Knoten zu einer Antwortstation zurückgeworfen wird, die zweite Richtung eine Einfallsrichtung ist, in welcher der erste NDP-Rahmen durch den ersten Knoten zu der Antwortstation zurückgeworfen wird, der zweite NDP-Rahmen ein Rahmen ist, der durch die Empfängerstation in eine dritte Richtung gesendet wird und durch den ersten Knoten zu der Initiatorstation zurückgeworfen wird, und die dritte Richtung entgegengesetzt zu der zweiten Richtung ist;

Erlangen (102, 205-208)
zweiter Positionierungsinformationen durch die Initiatorstation, wobei die zweiten Positionierungsinformationen einen Sendezeitpunkt eines dritten NDP-Rahmens, der einem Senden des dritten NDP-Rahmens durch die Initiatorstation entspricht, einen Empfangszeitpunkt des dritten NDP-Rahmens, der einem Empfangen des dritten NDP-Rahmens durch die Antwortstation entspricht, einen Sendezeitpunkt eines vierten NDP-Rahmens, der einem Senden des vierten NDP-Rahmens durch die Antwortstation entspricht, einen Empfangszeitpunkt des vierten NDP-Rahmens, der einem Empfangen des vierten NDP-Rahmens durch die Initiatorstation entspricht, eine vierte Richtung und eine fünfte Richtung umfassen, wobei der dritte NDP-Rahmen ein Rahmen ist, der durch die Initiatorstation in die vierte Richtung gesendet wird und durch einen zweiten Knoten zu der Antwortstation zurückgeworfen wird, die fünfte Richtung eine Einfallsrichtung ist, in welcher der dritte NDP-Rahmen durch den zweiten Knoten zu der Antwortstation zurückgeworfen wird, der vierte NDP-Rahmen ein Rahmen ist, der durch die Antwortstation in eine sechste Richtung gesendet wird und durch den zweiten Knoten zu der Initiatorstation zurückgeworfen wird, und die sechste Richtung entgegengesetzt zu der fünften Richtung ist; und

Bestimmen (103) von Standortinformationen der Initiatorstation durch die Initiatorstation auf Grundlage von Standortinformationen der Antwortstation, den ersten Positionierungsinformationen und den zweiten Positionierungsinformationen;

wobei das Verfahren ferner Folgendes umfasst:

Bestimmen von Standortinformationen des ersten Knotens durch die Initiatorstation auf Grundlage der Standortinformationen der Antwortstation, der Standortinformationen der Initiatorstation, eines ersten Abgangswinkels (angle of departure - AoD), welcher der ersten Richtung entspricht, und eines ersten Ankunftswinkels (angle of arrival - AoA), welcher der zweiten Richtung entspricht; und/oder

Bestimmen von Standortinformationen des zweiten Knotens durch die Initiatorstation auf Grundlage der Standortinformationen der Antwortstation, den Standortinformationen der Initiatorstation, eines zweiten AoD, welcher der vierten Richtung entspricht, und eines zweiten AoA, welcher der fünften Richtung entspricht;

wobei der erste Knoten und der zweite Knoten passive Vorrichtungen sind oder aktive Vorrichtungen sind, die in einem passiven Modus arbeiten, sodass der erste Knoten und der zweite Knoten keine Wi-Fi-Kommunikationsfähigkeit aufweisen.

2. Verfahren nach Anspruch 1, wobei das Erlangen erster Positionierungsinformationen durch eine Initiatorstation Folgendes umfasst:

Durchführen einer gerichteten Feinzeitmessung durch die Initiatorstation, um die ersten Positionierungsinformationen zu erlangen, wobei das Durchführen einer gerichteten Feinzeitmessung durch die Initiatorstation zum Erlangen der ersten Positionierungsinformationen Folgendes umfasst:

Senden des ersten NDP-Rahmens, der durch den ersten Knoten zu der Antwortstation zurückzuwerfen ist, durch die Initiatorstation in die erste Richtung und Bestimmen des Sendezeitpunkts des ersten NDP-Rahmens;

Empfangen des zweiten NDP-Rahmens, der durch die Antwortstation in die dritte Richtung gesendet wird und durch den ersten Knoten zurückgeworfen wird, durch die Initiatorstation und Bestimmen des Empfangszeitpunkts des zweiten NDP-Rahmens; und

Empfangen eines ersten Standortmessberichts von der Antwortstation durch die Initiatorstation, wobei der erste Standortmessbericht den Empfangszeitpunkt des ersten NDP-Rahmens, den Sendezeitpunkt des zweiten NDP-Rahmens und die zweite Richtung umfasst; und

das Erlangen zweiter Positionierungsinformationen durch die Initiatorstation Folgendes umfasst:

Durchführen einer gerichteten Feinzeitmessung durch die Initiatorstation, um die zweiten Positionierungsinformationen zu erlangen, wobei das Durchführen einer gerichteten Feinzeitmessung durch die Initiatorstation zum Erlangen der zweiten Positionierungsinformationen Folgendes umfasst:

Senden des dritten NDP-Rahmens, der durch den zweiten Knoten zu der Antwortstation zurückzuwerfen ist, durch die Initiatorstation in die vierte Richtung und Bestimmen des Sendezeitpunkts des dritten NDP-Rahmens;

Empfangen des vierten NDP-Rahmens, der durch die Antwortstation in die sechste Richtung gesendet wird und durch den zweiten Knoten zurückgeworfen wird, durch die Initiatorstation und Bestimmen des Empfangszeitpunkts des vierten NDP-Rahmens; und

Empfangen eines zweiten Standortmessberichts von der Antwortstation durch die Initiatorstation, wobei der zweite Standortmessbericht den Empfangszeitpunkt des dritten NDP-Rahmens, den Sendezeitpunkt des vierten NDP-Rahmens und die fünfte Richtung umfasst.

3. Verfahren nach Anspruch 1 oder 2, das vor dem Erlangen erster Positionierungsinformationen durch eine Initiatorstation ferner Folgendes umfasst:

Empfangen eines Auslöserahmens von der Antwortstation durch die Initiatorstation, wobei der Auslöserahmen eine Typangabe umfasst, die Typangabe dazu konfiguriert ist, anzugeben, dass es sich bei einem Typ des Auslöserahmens um einen Typ zur gerichteten Entfernungsmessung handelt, und der Auslöserahmen des Typs zur gerichteten Entfernungsmessung dazu konfiguriert ist, auszulösen, dass die Initiatorstation eine gerichtete Feinzeitmessung durchführt.

4. Verfahren nach Anspruch 1 oder 2, das vor dem Erlangen erster Positionierungsinformationen durch eine Initiatorstation ferner Folgendes umfasst:

Senden eines NDP-Ankündigungsrahmens an die Antwortstation durch die Initiatorstation, wobei der NDP-Ankündigungsrahmen eine Richtungsangabe umfasst und die Richtungsangabe dazu konfiguriert ist, einen Knoten anzugeben, der an der Feinzeitmessung zum Durchführen der gerichteten Feinzeitmessung teilzunehmen hat.

5. Verfahren nach einem der Ansprüche 1 bis 4, das vor dem Erlangen erster Positionierungsinformationen durch eine Initiatorstation, ferner Folgendes umfasst:

Senden eines Anforderungsrahmens an die Antwortstation durch die Initiatorstation, wobei der Anforderungsrahmen erste Informationen und zweite Informationen umfasst, die ersten Informationen dazu konfiguriert sind, anzugeben, dass die aktuelle Verhandlung verwendet wird, um eine gerichtete Feinzeitmessung durchzuführen, und die zweiten Informationen dazu konfiguriert sind, anzugeben, dass die Initiatorstation eine gerichtete Feinzeitmessung unterstützt; und
Empfangen eines Antwortrahmens durch die Initiatorstation als Reaktion auf den Anforderungsrahmen von der Antwortstation, wobei der Antwortrahmen die ersten Informationen und dritte Informationen umfasst und die dritten Informationen dazu konfiguriert sind, anzugeben, dass die Antwortstation eine gerichtete Feinzeitmessung unterstützt.

6. Verfahren nach einem der Ansprüche 1 bis 5, wobei das Bestimmen von Standortinformationen der Initiatorstation durch die Initiatorstation auf Grundlage von Standortinformationen der Antwortstation, den ersten Positionierungsinformationen und den zweiten Positionierungsinformationen Folgendes umfasst:

Bestimmen einer ersten Entfernung durch die Initiatorstation auf Grundlage des Sendezeitpunkts des ersten NDP-Rahmens, des Empfangszeitpunkts des ersten NDP-Rahmens, des Sendezeitpunkts des zweiten NDP-Rahmens und des Empfangszeitpunkts des zweiten NDP-Rahmens, wobei die erste Entfernung eine Summe einer Entfernung zwischen der Initiatorstation und dem ersten Knoten und einer Entfernung zwischen dem ersten Knoten und der Antwortstation ist;
Bestimmen einer zweiten Entfernung durch die Initiatorstation auf Grundlage des Sendezeitpunkts des dritten NDP-Rahmens, des Empfangszeitpunkts des dritten NDP-Rahmens, des Sendezeitpunkts des vierten NDP-Rahmens und des Empfangszeitpunkts des vierten NDP-Rahmens, wobei die zweite Entfernung eine Summe einer Entfernung zwischen der Initiatorstation und dem zweiten Knoten und einer Entfernung zwischen dem zweiten Knoten und der Antwortstation ist; und Bestimmen der Standortinformationen der Initiatorstation durch die Initiatorstation auf Grundlage der Standortinformationen der Antwortstation, der ersten Entfernung, der zweiten Entfernung, der ersten Richtung, der zweiten Richtung, der vierten Richtung und der fünften Richtung.

7. Verfahren nach Anspruch 5, wobei der Antwortrahmen ferner eine Verzögerungsangabe umfasst und die Verzögerungsangabe dazu konfiguriert ist, eine Verzögerungsdauer für ein Rückmelden eines Standortmessberichts durch die Antwortstation anzugeben.

8. Verfahren nach Anspruch 7, wobei, wenn ein Wert der Verzögerungsangabe 0 ist, die Verzögerungsangabe dazu konfiguriert ist, anzugeben, dass die Verzögerungsdauer 0 ist, und, wenn der Wert der Verzögerungsangabe ein Wert ungleich null ist, die Verzögerungsangabe dazu konfiguriert ist, eine Länge der Verzögerungsdauer anzugeben.

9. Verfahren nach Anspruch 4, wobei der NDP-Ankündigungsrahmen ferner eine neue und alte Richtungsangabe umfasst und die neue und alte Richtungsangabe dazu konfiguriert ist, anzugeben, dass eine Senderichtung eines NDP-Rahmens, der nach dem NDP-Ankündigungsrahmen gesendet wird, gleich einer Senderichtung eines NDP-Rahmens ist, der nach einem vorherigen NDP-Ankündigungsrahmen gesendet wurde.

10. Einrichtung, die Mittel umfasst, die dazu konfiguriert sind, ein Verfahren nach einem der Ansprüche 1 bis 9 durchzuführen.

## Revendications

1. Procédé de positionnement, comprenant :

l'obtention (101, 201-204),
par une station initiatrice, de premières informations de positionnement, dans lequel les premières informations de positionnement comprennent un instant d'envoi d'une première trame de paquet de données nul, NDP, correspondant à l'envoi de la première trame NDP par la station initiatrice, un instant de réception de la première trame NDP correspondant à la réception de la première trame NDP par la station répondeuse, un instant d'envoi d'une deuxième trame NDP correspondant à l'envoi de la deuxième trame NDP par la station répondeuse, un instant de réception de la deuxième trame NDP correspondant à la réception de la deuxième trame NDP par la station initiatrice, un premier sens, et un deuxième sens, la première trame NDP est une trame qui est envoyée par la station initiatrice dans le premier sens et qui est réfléchie vers une station répondeuse par un premier noeud, le deuxième sens est un sens incident dans lequel la première trame NDP est réfléchie vers la station répondeuse par le premier noeud, la deuxième trame NDP est une trame qui est envoyée par la station répondeuse dans un troisième sens et qui est réfléchie vers la station initiatrice par le premier noeud, et le troisième sens est opposé au deuxième sens ;

l'obtention (102, 205-208),

par une station initiatrice, de secondes informations de positionnement, dans lequel les secondes informations de positionnement comprennent un instant d'envoi d'une troisième trame NDP correspondant à l'envoi de la troisième trame NDP par la station initiatrice, un instant de réception de la troisième trame NDP correspondant à la réception de la troisième trame NDP par la station répondeuse, un instant d'envoi d'une quatrième trame NDP correspondant à l'envoi de la quatrième trame NDP par la station répondeuse, un instant de réception de la quatrième trame NDP correspondant à la réception de la quatrième trame NDP par la station initiatrice, un quatrième sens, et un cinquième sens, la troisième trame NDP est une trame qui est envoyée par la station initiatrice dans le quatrième sens et qui est réfléchie vers la station répondeuse par un second noeud, le cinquième sens est un sens incident dans lequel la troisième trame NDP est réfléchie vers la station répondeuse par le second noeud, la quatrième trame NDP est une trame qui est envoyée par la station répondeuse dans un sixième sens et qui est réfléchie vers la station initiatrice par le second noeud, et le sixième sens est opposé au cinquième sens ; et

la détermination (103), par la station initiatrice, d'informations d'emplacement de la station initiatrice sur la base d'informations d'emplacement de la station répondeuse, des premières informations de positionnement et des secondes informations de positionnement ;

dans lequel le procédé comprend en outre :

la détermination, par la station initiatrice, d'informations d'emplacement du premier noeud sur la base des informations d'emplacement de la station répondeuse, des informations d'emplacement de la station initiatrice, d'un premier angle d'approche, AoD, correspondant au premier sens, et d'un premier angle d'arrivée, AoA, correspondant au deuxième sens ; et/ou

la détermination, par la station initiatrice, d'informations d'emplacement du second noeud sur la base des informations d'emplacement de la station répondeuse, des informations d'emplacement de la station initiatrice, d'un second AoD correspondant au quatrième sens, et d'un second AoA correspondant au cinquième sens ;

dans lequel le premier noeud et le second noeud sont des dispositifs passifs, ou sont des dispositifs actifs qui fonctionnent en mode passif, de sorte que le premier noeud et le second noeud n'ont pas de capacité de communication Wi-Fi.

2. Procédé selon la revendication 1, dans lequel l'obtention, par une station initiatrice, de premières informations de positionnement comprend :

l'exécution, par la station initiatrice, d'une mesure fine du temps directionnel pour obtenir les premières informations de positionnement, dans lequel l'exécution, par la station initiatrice, d'une mesure fine du temps directionnel pour obtenir les premières informations de positionnement comprend :

l'envoi, par la station initiatrice dans le premier sens, de la première trame NDP qui doit être réfléchie vers la station répondeuse par le premier noeud, et la détermination de l'instant d'envoi de la première trame NDP ;

la réception, par la station initiatrice, de la deuxième trame NDP qui est envoyée par la station répondeuse dans le troisième sens et qui est réfléchie par le premier noeud, et la détermination de l'instant de réception de la deuxième trame NDP ; et

la réception, par la station initiatrice, d'un premier rapport de mesure d'emplacement depuis la station répondeuse, dans lequel le premier rapport de mesure d'emplacement comprend l'instant de réception de la première trame NDP, l'instant d'envoi de la deuxième trame NDP, et le deuxième sens ; et

l'obtention, par la station initiatrice, de secondes informations de positionnement comprend :

l'exécution, par la station initiatrice, d'une mesure fine du temps directionnel pour obtenir les secondes informations de positionnement, dans lequel l'exécution, par la station initiatrice, d'une mesure fine du temps directionnel pour obtenir les secondes informations de positionnement comprend :

l'envoi, par la station initiatrice dans le quatrième sens, de la troisième trame NDP qui doit être réfléchie vers la station répondeuse par le second noeud, et la détermination de l'instant d'envoi de la troisième trame NDP ;

la réception, par la station initiatrice, de la quatrième trame NDP qui est envoyée par la station répondeuse dans le sixième sens et qui est réfléchie par le second noeud, et la détermination de l'instant de réception de la quatrième trame NDP ; et

la réception, par la station initiatrice, d'un second rapport de mesure d'emplacement depuis la station répondeuse, dans lequel le second rapport de mesure d'emplacement comprend l'instant de réception de la troisième trame NDP, l'instant d'envoi de la quatrième trame NDP, et le cinquième sens.

3. Procédé selon la revendication 1 ou 2, avant l'obtention, par une station initiatrice, de premières informations de positionnement, comprenant en outre :
la réception, par la station initiatrice, d'une trame de déclenchement depuis la station répondeuse, dans lequel la trame de déclenchement comprend une indication de type, l'indication de type est configurée pour indiquer qu'un type de la trame de déclenchement est un type de télémétrie directionnelle, et la trame de déclenchement du type de télémétrie directionnelle est configurée pour déclencher la station initiatrice pour exécuter une mesure fine du temps directionnel.

4. Procédé selon la revendication 1 ou 2, avant l'obtention, par une station initiatrice, de premières informations de positionnement, comprenant en outre :
l'envoi, par la station initiatrice, d'une trame d'annonce NDP à la station répondeuse, dans lequel la trame d'annonce NDP comprend une indication directionnelle, et l'indication directionnelle est configurée pour indiquer un noeud qui doit participer à une mesure fine du temps pour exécuter une mesure fine du temps directionnel.

5. Procédé selon l'une quelconque des revendications 1 à 4, avant l'obtention, par une station initiatrice, de premières informations de positionnement, comprenant en outre :

l'envoi, par la station initiatrice, d'une trame de demande à la station répondeuse, dans lequel la trame de demande comprend des premières informations et des deuxièmes informations, les premières informations sont configurées pour indiquer que la négociation en cours est utilisée pour exécuter une mesure fine du temps directionnel, et les deuxièmes informations sont configurées pour indiquer que la station initiatrice prend en charge une mesure fine du temps directionnel ; et

la réception, par la station initiatrice, d'une trame de réponse en réponse à la trame de demande provenant de la station répondeuse, dans lequel la trame de réponse comprend les premières informations et des troisièmes informations, et les troisièmes informations sont configurées pour indiquer que la station répondeuse prend en charge une mesure fine du temps directionnel.

6. Procédé selon l'une quelconque des revendications 1 à 5, dans lequel la détermination, par la station initiatrice, d'informations d'emplacement de la station initiatrice sur la base des informations d'emplacement de la station répondeuse, des premières informations de positionnement et des secondes informations de positionnement comprend :

la détermination, par la station initiatrice, d'une première distance sur la base de l'instant d'envoi de la première trame NDP, de l'instant de réception de la première trame NDP, de l'instant d'envoi de la deuxième trame NDP et de l'instant de réception de la deuxième trame NDP, dans lequel la première distance est une somme d'une distance entre la station initiatrice et le premier noeud et d'une distance entre le premier noeud et la station répondeuse ;

la détermination, par la station initiatrice, d'une seconde distance sur la base de l'instant d'envoi de la troisième trame NDP, de l'instant de réception de la troisième trame NDP, de l'instant d'envoi de la quatrième trame NDP et de l'instant de réception de la quatrième trame NDP, dans lequel la seconde distance est une somme d'une distance entre la station initiatrice et le second noeud et d'une distance entre le second noeud et la station répondeuse ;

la détermination, par la station initiatrice, des informations d'emplacement de la station initiatrice sur la base des informations d'emplacement de la station répondeuse, de la première distance, de la seconde distance, du premier sens, du deuxième sens, du quatrième sens et du cinquième sens.

7. Procédé selon la revendication 5, dans lequel la trame de réponse comprend en outre une indication de retard, et l'indication de retard est configurée pour indiquer une durée de retard pour renvoyer un rapport de mesure d'emplacement par la station répondeuse.

8. Procédé selon la revendication 7, dans lequel lorsqu'une valeur de l'indication de retard est 0, l'indication de retard est configurée pour indiquer que la durée de retard est 0, et lorsque la valeur de l'indication de retard est une valeur non nulle, l'indication de retard est configurée pour indiquer une longueur de la durée de retard.

9. Procédé selon la revendication 4, dans lequel la trame d'annonce NDP comprend en outre une indication de sens nouveau et ancien, et l'indication de sens nouveau et ancien est configurée pour indiquer qu'un sens d'envoi d'une trame NDP envoyée après la trame d'annonce NDP est le même qu'un sens d'envoi d'une trame NDP envoyée après une trame d'annonce NDP précédente.

10. Appareil comprenant un moyen configuré pour exécuter un procédé selon l'une quelconque des revendications 1 à 9.

FIG. 1

FIG. 2

RSTA                                                                ISTA

Initial FTM request frame

ACK frame

≤ 10 ms

Initial FTM measurement frame

ACK frame

FIG. 3

| Element identifier (element ID) (255) | Length (length) | Element identifier extension (element ID extension) | Ranging Parameters (ranging parameters) | Ranging subelements (ranging subelements) |
|---|---|---|---|---|

Octets (octets): 1    1    1    4    Variable (variable)

| | B2–B6 | B7 | B8 | B9 | B10–B11 | B12 | B13 | B14 | B15 |
|---|---|---|---|---|---|---|---|---|---|
| Status indication (status indication) | Value (value) | Location measurement report feedback (ISTA-2-RSTA LMR feedback) | Secure LTF Req. (secure LTF Req.) | Secure LTF support (secure LTF support) | Ranging priority (ranging priority) | R2I ToA type (R2I ToA type) | I2R ToA type (R2R ToA type) | (R2I AoA Req.) | (I2R AoA Req.) |

Bits (bits): 2    5    1    1    1    2    1    1    1    1

| B16–B21 | B22–B23 | B24–B26 | B27–B29 | B30 | B31 | B32–B34 | B35–B37 |
|---|---|---|---|---|---|---|---|
| Format and bandwidth (format and bandwidth) | Reserved (reserved) | (Maximum (Max) UL Rep) | (Maximum (Max) DL Rep) | Device class (device class) | Full bandwidth uplink MU-MIMO (full bandwidth UL MU-MIMO) | Maximum (Max) DL STS ≤ 80 MHz | Maximum (Max) DL STS > 80 MHz |

Bits (bits): 6    2    3    3    1    1    3    3

| B38–B39 | B40–B42 | B43–B45 | B46–B47 |
|---|---|---|---|
| Reserved (reserved) | Maximum (Max) UL STS ≤ 80 MHz | Maximum (Max) UL STS > 80 MHz | Reserved (reserved) |

Bits (bits): 2    3    3    2

FIG. 4

B0–B7    B8–B15

| Subelement identifier (subelement ID) (1) | Length (length) | Availability window (aavailability window) | RID/AID | Response (response) | Trigger frame padding duration (trigger frame padding duration) | Passive location ranging (passive location ranging) | (Maximum (Max) ToA available (available) Exp) | BSS color (BSS color) |
|---|---|---|---|---|---|---|---|---|
| **Bits (bits)** 8 | 8 | Variable (variable) | 16 | 1 | 2 | 1 | 4 | 8 |

FIG. 5a

EP 3 972 331 B1

37

| Subelement Identifier (subelement ID) (0) | Length (length) | Minimum time between measurements (Min time between measurements) | Min ToA ready (Min ToA ready) | Reserved (reserved) | (Maximum (Max) ToA available (available) Exp) |
|---|---|---|---|---|---|
| 8 | 8 | 8 | 8 | 4 | 4 |

Bits (bits)

FIG. 5b

Frequency domain

Time domain

**Polling phase**

TF ranging poll

CTS-to-self

SIFS

SIFS

**Ranging measurement phase**

TF ranging sounding frame

UL NDP

Ranging NDPA

DL NDP

SIFS

SIFS

SIFS

SIFS

**Measurement report feedback phase**

RSTA To ISTA LMR

SIFS

represents a frame sent by the ISTA

represents a frame sent by the RSTA

FIG. 6

RSTA                                                                    ISTA

TF ranging sounding frame

UL NDP                                                            t1

t2

DL ranging (ranging) NDPA

t3

DL NDP

t4

FIG. 7

MAC header
(MAC header)

| Frame control (frame control) | Duration (duration) | RA | TA | Common information (common info) | User information (user info) | ... | User information (user info) | Padding (padding) | (FCS) |
|---|---|---|---|---|---|---|---|---|---|

| Octets (octets) | 2 | 2 | 6 | 6 | 8 or more | 5 or more | | 5 or more | Variable (variable) | 4 |

FIG. 8a

| B0–B3 | B4–B15 | B16 | B17 | B18–B19 | B20–B21 | B22 | B23–B25 |
|---|---|---|---|---|---|---|---|
| Trigger type (trigger type) | Uplink length (UL length) | (More (more) TF) | (CS required (required)) | (UL BW) | GI and LTF type (GI and LTF type) | MU-MIMO LTF mode (MU-MIMO LTF mode) | Number of HE-LTF symbols and mid-amble periodicity (number of HE-LTF symbols and mid-amble periodicity) |
| Bits (bits) | | | | | | | |
| 4 | 12 | 1 | 1 | 2 | 2 | 1 | 3 |

| B26 | B27 | B28–B33 | B34–B35 | B36 | B37–B52 | B53 | B54–B62 | B63 | |
|---|---|---|---|---|---|---|---|---|---|
| (UL STBC) | LDPC extra symbol segment (LDPC extra symbol segment) | (AP TX power (power)) | (Pre-FEC padding factor (padding factor)) | (PE disambiguity (disambiguity)) | UL spatial reuse (UL spatial reuse) | Doppler (doppler) | (UL HE-SIG-A2 reserved (reserved)) | Reserved (reserved) | Trigger dependent common information (trigger dependent common info) |
| Bits (bits) | | | | | | | | | |
| 1 | 1 | 6 | 2 | 1 | 16 | 1 | 9 | 1 | |

FIG. 8b

EP 3 972 331 B1

| Ranging trigger subtype (ranging trigger subtype) | Reserved (reserved) |
|---|---|
| 4 | 4 |

Bits
(bits)

FIG. 8c

Frequency domain

| Negotiation procedure | Measurement procedure | Result feedback procedure | Measurement procedure | Result feedback procedure |

Negotiate and allocate a ranging identifier

Ranging measurement phase

Measurement report feedback phase

Ranging measurement phase

Measurement report feedback phase

Time domain

Available time period N

Available time period N+1

Fixed time period

Fixed time period

FIG. 9

EP 3 972 331 B1

FIG. 10

FIG. 11

| Frame control (frame control) | Duration (duration) | RA | TA | Sounding dialog token (sounding dialog token) | Station information 1 (STA info 1) | ... | Station information n (STA info n) | (STA info SAC) | (FCS) |
|---|---|---|---|---|---|---|---|---|---|
| Octets (octets) | | | | | | | | | |
| 2 | 2 | 6 | 6 | 1 | 4 | | 4 | 4 | 4 |

FIG. 12a

| B0–B10 | B11–B16 | B17–B19 | B20–B22 | B23–B25 | B26 | B27 | B28–B30 | B31 |
|---|---|---|---|---|---|---|---|---|
| AID11/ RID11 | Offset (offset) | (DL N_STS) | (DL Rep) | (UL N_STS) | Reserved (reserved) | Disambiguation (disambiguation) | (UL Rep) | Reserved (reserved) |

| Bits (bits) | 11 | 6 | 3 | 3 | 3 | 1 | 1 | 3 | 1 |

FIG. 12b

EP 3 972 331 B1

An initiator station obtains first positioning information, where the first positioning information includes a sending moment of a first NDP frame, a receiving moment of the first NDP frame, a sending moment of a second NDP frame, a receiving moment of the second NDP frame, a first direction, and a second direction

Step 101

The initiator station obtains second positioning information, where the second positioning information includes a sending moment of a third NDP frame, a receiving moment of the third NDP frame, a sending moment of a fourth NDP frame, a receiving moment of the fourth NDP frame, a fourth direction, and a fifth direction

Step 102

The initiator station determines location information of the initiator station based on location information of a responder station, the first positioning information, and the second positioning information

Step 103

FIG. 13

FIG. 14

First node

C

First
direction

Second direction

Third
direction

B

Responder
station

Initiator
station

A

Fifth
direction

Sixth
direction

Fourth
direction

D

Second node

| Responder station | Second node | First node | Initiator station |
|---|---|---|---|
| TO FIG. 15B | TO FIG. 15B | TO FIG. 15B | TO FIG. 15B |

FIG. 15A

CONT.
FROM
FIG. 15A

CONT.
FROM
FIG. 15A

CONT.
FROM
FIG. 15A

CONT.
FROM
FIG. 15A

Step 201: The initiator station sends, in the first direction, a first NDP frame that is to be reflected to the responder station by the first node, and the initiator station determines a sending moment of the first NDP frame, and correspondingly, the responder station receives the first NDP frame that is sent by the initiator station in the first direction and that is reflected by the first node, and the responder station determines a receiving moment of the first NDP frame

Step 202: Determine an incident direction in which the first NDP frame is reflected to the responder station by the first node

Step 203: The responder station sends, in the third direction opposite to the second direction, a second NDP frame that is to be reflected to the initiator station by the first node, and the responder station determines a sending moment of the second NDP frame, and correspondingly, the initiator station receives the second NDP frame that is sent by the responder station in the third direction and that is reflected by the first node, and the initiator station determines a receiving moment of the second NDP frame

Step 204: The responder station sends a first location measurement report to the initiator station

TO
FIG. 15C

TO
FIG. 15C

TO
FIG. 15C

TO
FIG. 15C

FIG. 15B

CONT.
FROM
FIG. 15B

CONT.
FROM
FIG. 15B

CONT.
FROM
FIG. 15B

CONT.
FROM
FIG. 15B

Step 205: The initiator station sends, in the fourth direction, a third NDP frame that is to be reflected to the responder station by the second node, and the initiator station determines a sending moment of the third NDP frame, and correspondingly, the responder station receives the third NDP frame that is sent by the initiator station in the fourth direction and that is reflected by the second node, and the responder station determines a receiving moment of the third NDP frame

Step 206: Determine an incident direction in which the third NDP frame is reflected to the responder station by the second node

Step 207: The responder station sends, in the sixth direction opposite to the fifth direction, a fourth NDP frame that is to be reflected to the initiator station by the second node, and the responder station determines a sending moment of the fourth NDP frame, and correspondingly, the initiator station receives the fourth NDP frame that is sent by the responder station in the sixth direction and that is reflected by the second node, and the initiator station determines a receiving moment of the fourth NDP frame

Step 208: The responder station sends a second location measurement report to the initiator station

FIG. 15C

First node

C

First
direction

Second
direction

Third
direction

Initiator
station

A

B

Responder
station

Fifth direction

Sixth
direction

Fourth
direction

D

Second node

| Responder station | Second node | First node | Initiator station |
| --- | --- | --- | --- |
| TO FIG. 16a(2) | TO FIG. 16a(2) | TO FIG. 16a(2) | TO FIG. 16a(2) |

FIG. 16a(1)

CONT.
FROM
FIG. 16a(1)

CONT.
FROM
FIG. 16a(1)

CONT.
FROM
FIG. 16a(1)

CONT.
FROM
FIG. 16a(1)

Step 301: The initiator station sends, in the first direction, a first NDP frame that is to be reflected to the responder station by the first node, and the initiator station determines a sending moment of the first NDP frame, and correspondingly, the responder station receives the first NDP frame that is sent by the initiator station in the first direction and that is reflected by the first node, and the responder station determines a receiving moment of the first NDP frame

Step 302: Determine an incident direction in which the first NDP frame is reflected to the responder station by the first node

Step 303: The responder station sends, in the third direction opposite to the second direction, a second NDP frame that is to be reflected to the initiator station by the first node, and the responder station determines a sending moment of the second NDP frame, and correspondingly, the initiator station receives the second NDP frame that is sent by the responder station in the third direction and that is reflected by the first node, and the initiator station determines a receiving moment of the second NDP frame

Step 304: The initiator station sends third positioning information to the responder station, where the third positioning information includes the sending moment of the first NDP frame, the receiving moment of the second NDP frame, and the first direction

TO
FIG. 16a(3)

TO
FIG. 16a(3)

TO
FIG. 16a(3)

TO
FIG. 16a(3)

FIG. 16a(2)

54

CONT.
FROM
FIG. 16a(2)

CONT.
FROM
FIG. 16a(2)

CONT.
FROM
FIG. 16a(2)

CONT.
FROM
FIG. 16a(2)

Step 305: The initiator station sends, in the fourth direction, a third NDP frame that is to be reflected to the responder station by the second node, and the initiator station determines a sending moment of the third NDP frame, and correspondingly, the responder station receives the third NDP frame that is sent by the initiator station in the fourth direction and that is reflected by the second node, and the responder station determines a receiving moment of the third NDP frame

Step 306: Determine an incident direction in which the third NDP frame is reflected to the responder station by the second node

Step 307: The responder station sends, in the sixth direction opposite to the fifth direction, a fourth NDP frame that is to be reflected to the initiator station by the second node, and the responder station determines a sending moment of the fourth NDP frame, and correspondingly, the initiator station receives the fourth NDP frame that is sent by the responder station in the sixth direction and that is reflected by the second node, and the initiator station determines a receiving moment of the fourth NDP frame

Step 308: The initiator station sends fourth positioning information to the responder station, where the fourth positioning information includes the sending moment of the third NDP frame, the receiving moment of the fourth NDP frame, and the fourth direction

Step 309: The responder station determines location information of the responder station based on location information of the initiator station, the third positioning information, and the fourth positioning information

FIG. 16a(3)

FIG. 16b(1)

Step 401: The initiator station sends, in the first direction, a first NDP frame that is to be reflected to the responder station by the first node, and the initiator station determines a sending moment of the first NDP frame, and correspondingly, the responder station receives the first NDP frame that is sent by the initiator station in the first direction and that is reflected by the first node, and the responder station determines a receiving moment of the first NDP frame

Step 402: Determine an incident direction in which the first NDP frame is reflected to the responder station by the first node

Step 403: The responder station sends, in the third direction opposite to the second direction, a second NDP frame that is to be reflected to the initiator station by the first node, and the responder station determines a sending moment of the second NDP frame, and correspondingly, the initiator station receives the second NDP frame that is sent by the responder station in the third direction and that is reflected by the first node, and the initiator station determines a receiving moment of the second NDP frame

Step 404: The responder station sends a first location measurement report to the initiator station

FIG. 16b(2)

CONT.
FROM
FIG. 16b(2)

CONT.
FROM
FIG. 16b(2)

CONT.
FROM
FIG. 16b(2)

CONT.
FROM
FIG. 16b(2)

Step 405: The initiator station sends, in the fourth direction, a third NDP frame that is to be reflected to the responder station by the second node, and the initiator station determines a sending moment of the third NDP frame, and correspondingly, the responder station receives the third NDP frame that is sent by the initiator station in the fourth direction and that is reflected by the second node, and the responder station determines a receiving moment of the third NDP frame

Step 406: Determine an incident direction in which the third NDP frame is reflected to the responder station by the second node

Step 407: The responder station sends, in the sixth direction opposite to the fifth direction, a fourth NDP frame that is to be reflected to the initiator station by the second node, and the responder station determines a sending moment of the fourth NDP frame, and correspondingly, the initiator station receives the fourth NDP frame that is sent by the responder station in the sixth direction and that is reflected by the second node, and the initiator station determines a receiving moment of the fourth NDP frame

Step 408: The responder station sends a second location measurement report to the initiator station

Step 409: The initiator station determines location information of the responder station based on location information of the initiator station, first positioning information, and second positioning information

FIG. 16b(3)

RSTA                      ISTA

Step 501: Initial FTM request frame
(first information and second information)

Step 502: ACK frame

≤ 10 ms

Step 503: Initial FTM measurement
frame (the first information and third
information)

Step 504: ACK frame

FIG. 17a

Time domain

Measurement report feedback phase

RSTA to ISTA LMR

Ranging measurement phase

Directional DL NDP frame

Directional ranging NDPA frame

Directional UL NDP

TF directional ranging sounding frame

SIFS

Polling phase

CTS-to-self

TF directional ranging poll frame

Frequency domain

represents a frame sent by the ISTA

represents a frame sent by the RSTA

FIG. 17b

RSTA                                                                    ISTA

TF directional ranging sounding frame

Directional UL NDP frame

Sending moment of
the directional UL
NDP frame

Receiving moment of
the directional UL
NDP frame

Directional ranging NDPA frame

Sending moment of
the directional DL
NDP frame

Directional DL NDP frame

Receiving moment
of the directional
DL NDP frame

FIG. 17c

FIG. 17d

FIG. 18

FIG. 19

represents a frame sent by the ISTA 1

represents a frame sent by the ISTA n

represents a frame sent by the RSTA

Time domain

Frequency domain

Measurement report feedback phase

An RSTA sends an LMR to each ISTA

Ranging measurement phase

Directional DL NDP frame

Directional ranging NDPA frame

Directional UL NDP

Directional UL NDP

TF directional ranging sounding frame

Polling phase

CTS-to-ISTA n

CTS-to-ISTA 1

TF directional ranging poll frame

SIFS

FIG. 20

2100

Positioning apparatus

Storage unit — 2101

↕

Processing unit — 2102

↕

Communications unit — 2103

FIG. 21

Positioning apparatus 2200

2202

Processor

2201

Memory

2204

2203

Communications interface

FIG. 22

**EP 3 972 331 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018041990 A1

- WO 2018069208 A1